# EUROPEAN PATENT SPECIFICATION

(11) **EP 4 500 917 B1**
(45) Date of publication and mention of the grant of the patent: **20.08.2025**
(21) Application number: 23734509.5
(22) Date of filing: 19.06.2023
(51) Int. Cl.: H04W 12/069, H04W 12/08, H04W 12/69, H04L 9/40, H04L 67/561

(54) **ACCESS CONTROL FOR DATA STORAGE IN COMMUNICATION NETWORKS**
ZUGANGSKONTROLLE FÜR DIE DATENSPEICHERUNG IN KOMMUNIKATIONSNETZEN
CONTRÔLE D'ACCÈS POUR LE STOCKAGE DE DONNÉES DANS LES RÉSEAUX DE COMMUNICATION

(30) Priority: 20.06.2022 WO PCT/TR2022/050620
(43) Date of publication of application: 05.02.2025
(60) Divisional application: 25185201.8
(73) Proprietor: Telefonaktiebolaget LM Ericsson (publ), 164 83 Stockholm (SE)
(72) Inventor: FU, Zhang, 120 78 Stockholm (SE); MATTSSON, Ulf, 434 36 Kungsbacka (SE); ÇOMAK DE CNUDDE, Pinar, 9290 Berlare (BE); KARAKOC, Ferhat, 34912 Istanbul (TR)
(74) Representative: Ericsson
(86) International application number: PCT/EP2023/066362
(87) International publication number: WO 2023/247394

(56) References cited:
- US-A1- 2022 116 400
- AIHUA LI ET AL: "KI #4, New Sol: ML model storage in ADRF and ML model provision from ADRF", vol. 3GPP SA 2, no. Online; 20220516 - 20220520, 24 May 2022 (2022-05-24), XP052168442, Retrieved from the Internet <URL:https://www.3gpp.org/ftp/tsg_sa/WG2_Arch/TSGS2_151E_Electronic_2022-05/Docs/S2-2205095.zip S2-2205095 TRÂ 23.700-81Â KIÂ #4,Â NewÂ Sol,Â MLÂ modelÂ storageÂ inÂ ADRFÂ andÂ MLÂ modelÂ provisionÂ fromÂ ADRF.docx> [retrieved on 20220524]
- THOMAS BELLING ET AL: "KI #3 solution proposal", vol. 3GPP SA 2, no. Online; 20220516 - 20220520, 6 May 2022 (2022-05-06), XP052167350, Retrieved from the Internet <URL:https://www.3gpp.org/ftp/tsg_sa/WG2_Arch/TSGS2_151E_Electronic_2022-05/Docs/S2-2203975.zip S2-2203975 was S2-2202806 23.700-81 eNA3 KI3 roaming solution.docx> [retrieved on 20220506]
- NOKIA ET AL: "Key issue on Security for AI/ML model sharing", vol. SA WG3, no. e-meeting; 20220516 - 20220520, 22 May 2022 (2022-05-22), XP052195545, Retrieved from the Internet <URL:https://ftp.3gpp.org/tsg_sa/WG3_Security/TSGS3_107e/Docs/S3-221221.zip S3-221221 was draft_S3-220722-r4.doc> [retrieved on 20220522]

## Description

### TECHNICAL FIELD

The present disclosure relates generally to the security of communication networks, and more specifically to techniques for controlling access to analytics data and/or models that are stored in a data repository of a communication network (e.g., 5G core network).

### BACKGROUND

Currently the fifth generation (5G) of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

At a high level, the 5G System (5GS) includes an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

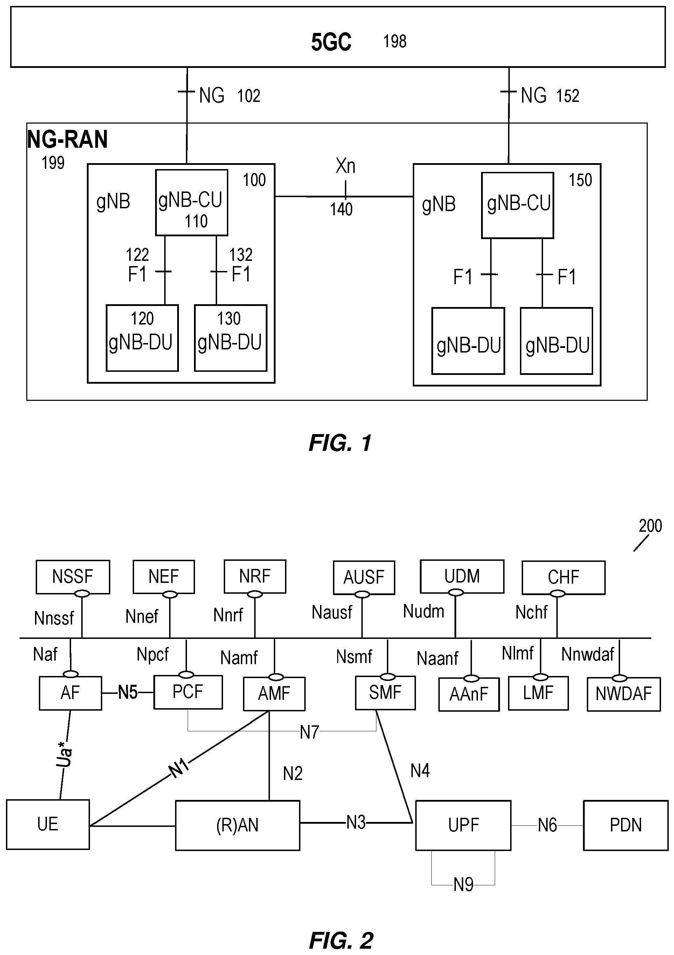

Figure 1 illustrates a high-level view of an exemplary 5G network architecture, which includes a Next Generation Radio Access Network (NG-RAN, 199) and a 5G Core (5GC, 198). The NG-RAN can include one or more gNodeB's (gNBs, e.g., 100, 150) connected to the 5GC via one or more NG interfaces (e.g., 102, 152). More specifically, the gNBs can be connected to one or more Access and Mobility Management Functions (AMFs) in the 5GC via respective NG-C interfaces and to one or more User Plane Functions (UPFs) in the 5GC via respective NG-U interfaces. Various other network functions (NFs) can be included in the 5GC, as described in more detail below.

In addition, the gNBs can be connected to each other via one or more Xn interfaces (e.g., 140 between gNBs 100, 150). The radio technology for the NG-RAN is often referred to as "New Radio" (NR). With respect to the NR interface to UEs, each of the gNBs can support frequency division duplexing (FDD), time division duplexing (TDD), or a combination thereof. Each of the gNBs can serve a geographic coverage area including one or more cells and, in some cases, can also use various directional beams to provide coverage in the respective cells.

NG RAN logical nodes shown in Figure 1 include a Centralized Unit (CU or gNB-CU) and one or more Distributed Units (DU or gNB-DU). CUs (*e.g.,* 110) are logical nodes that host higher-layer protocols and perform various gNB functions such controlling the operation of DUs. In contrast, DUs (*e.g.,* 120, 130) are decentralized logical nodes that host lower layer protocols and can include, depending on the functional split option, various subsets of gNB functions. As such, CUs and DUs can include various circuitry needed to perform their respective functions, including processing circuitry, communication interface circuitry, power supply circuitry, etc. A CU connects to one or more DUs over respective F1 logical interfaces (e.g., 122, 132).

Another change in 5G networks (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services.

Furthermore, the services are composed of various "service operations," which are more granular divisions of the overall service functionality. The interactions between service consumers and producers can be of the type "request/response" or "subscribe/notify." In the 5G SBA, network repository functions (NRF) allow every network function to discover the services offered by other network functions, and Data Storage Functions (DSF) allow every network function to store its context. This 5G SBA model is based on principles including modularity, reusability, and self-containment of NFs, which can enable network deployments to take advantage of the latest virtualization and software technologies.

A Network Data Analytics Function (NWDAF) provides network analytics information (e.g., statistical information of past events and/or predictive information) to other NFs. The NWDAF can also perform storage and retrieval of analytics information from an Analytics Data Repository Function (ADRF).

Indirect communication in SBA was specified in 3GPP Rel-16, using a Service Communication Proxy (SCP) as a standardized proxy between Service Consumers and Service Producers. 3GPP Rel-17 enhanced SBA with a Data Management Framework that includes a Data Collection Coordination Function (DCCF) and an optional messaging framework. Data consumers ask DCCF for data collection in relation to a data producer. The DCCF subscribes to the data source (if it does not have a subscription already) and then coordinates the request and data delivery, e.g., using the messaging framework. The data producer inputs the requested data to the messaging framework, which delivers the data to the data consumer.

US 2022/116400 A1 relates to methods and apparatuses for providing authorization in communication networks.

S2-2203975, Kl #3 solution proposal, SA WG2 Meeting #151E,16-20 May, 3RD GENERATION PARTNERSHIP PROJECT (3GPP), MOBILE COMPETENCE CENTRE; 650, ROUTE DES LUCIOLES F-06921 SOPHIA-ANTIPOLIS CEDEX ; FRANCE relates to data exchange and analytics exposure between Home Public Land Mobile Network (HPLMN) and Visited Public Land Mobile Network (VPLMN) of a of a user equipment (UE).

### SUMMARY

DCCF can be used by data consumers to request/obtain analytics information stored in ADRF. Before providing analytics information stored in ADRF to a requesting data consumer via DCCF, it is necessary and/or desirable to verify that the data consumer is actually authorized to obtain the requested information. Applicants have recognized that current verification solutions are inadequate for various reasons.

An object of embodiments of the present disclosure is to address these and other problems related to security of analytics information, issues, and/or difficulties, thereby enabling the otherwise-advantageous implementation of data and analytics functionality in a 5G system.

Some embodiments of the present disclosure include methods (*e.g*., procedures) for a data consumer NF (NFc) of a communication network (*e.g*., 5GC).

These exemplary methods can include sending, to a data producer network function (NFp) of the communication network, a first request for first data produced by the NFp and stored in a data repository function (DRF) of the communication network. These exemplary method can also include receiving, from the NFp, a response that includes an indication that the NFc is authorized to access the first data stored in the DRF. These exemplary methods can also include sending, to the DRF, a second request for the first data. The second request includes the indication that the NFc is authorized to access the first data stored in the DRF. These exemplary methods can also include receiving the first data from the DRF in response to the second request.

In some embodiments, the response from the NFc also includes information identifying the DRF. In some of these embodiments, the information identifying the DRF comprises an identity of the DRF or an address of the DRF.

In some embodiments, the indication that the NFc is authorized to access the first data stored in the DRF is an access token or a string signed with a digital signature of the NFp. In some of these embodiments, the access token or the signed string includes metadata related to one or more of the following: the first data, the NFc, the NFp, and the DRF. In some variants, the following apply:
- the metadata related to the first data includes one or more of the following: one or more identifiers of the first data, and one or more specifications of the first data;
- the metadata related to the NFc includes one of more of the following: a type of the NFc, and an instance identifier of the NFc;
- the metadata related to the NFp includes one of more of the following: a type of the NFp, and an instance identifier of the NFp; and
- the metadata related to the DRF includes one or more of the following: a service operation for accessing the first data, a time window for accessing the first data, and a storage transaction identifier associated with the first data.

In other embodiments, the indication that the NFc is authorized to access the first data stored in the DRF is a random string and the second request also includes metadata related to the first data and metadata related to the NFc. In some of these embodiments, the following apply:
- the metadata related to the first data includes one or more of the following: one or more identifiers of the first data, and one or more specifications of the first data; and
- the metadata related to the NFc includes one of more of the following: a type of the NFc, and an instance identifier of the NFc.

In some embodiments, the first data includes one or more of the following: analytics data, and one or more AI/ML models.

Other embodiments include exemplary methods (*e.g*., procedures) for a data producer NF (NFp) of a communication network (e.g., 5GC).

These exemplary methods can include storing, in a DRF of the communication network, first data stored together with metadata related to one or more of the following: the first data, the NFp, the DRF, and an NFc. These exemplary methods can also include receiving from the NFc a first request for the first data stored in the DRF. These exemplary methods can also include sending, to the NFc, a first response that includes an indication that the NFc is authorized to access the first data stored in the DRF.

In some embodiments, the first response to the NFp also includes information identifying the DRF. In some of these embodiments, the information identifying the DRF comprises an identity of the DRF or an address of the DRF.

In various embodiments, the metadata can include any of the metadata summarized above for NFp embodiments. In some embodiments, the first data includes analytics data and/or one or more AI/ML models.

In some embodiments, the indication that the NFc is authorized to access the first data stored in the DRF is an access token or a string signed with a digital signature of the NFp. In some of these embodiments, the access token or the signed string includes the metadata that was stored together with the first data.

In other embodiments, the indication that the NFc is authorized to access the first data stored in the DRF is a random string. In such embodiments, these exemplary methods can also include the following operations: receiving from the DRF a second request that includes a random string, metadata related to the first data, and metadata related to the NFc; and sending to the DRF a second response indicating that the NFc is authorized to access the first data, based on detecting the following matches: between the random strings in the first response and the second request; and between the metadata stored with the first data and the metadata in the second request.

Other embodiments include exemplary methods (*e.g*., procedures) for a DRF of a communication network (e.g., 5GC).

These exemplary methods can include storing first data produced by an NFp of the communication network. The first data is stored together with metadata related to one or more of the following: the first data, the NFp, the DRF, and an NFc. These exemplary methods can also include receiving from the NFc a request for the first data. The request includes an indication that the NFc is authorized to access the first data. These exemplary methods can also include, based on verifying that the NFc is authorized to access the first data, sending the first data to the NFc.

In various embodiments, the metadata can include any of the metadata summarized above for NFp embodiments. In some embodiments, the first data includes analytics data and/or one or more AI/ML models.

In some embodiments, the indication that the NFc is authorized to access the first data is an access token that includes metadata related to one or more of the following: the first data, the NFp, the DRF, and the NFc. In such embodiments, verifying that the NFc is authorized to access the first data can include detecting a match between claims of the access token and the metadata stored with the first data.

In other embodiments, the indication that the NFc is authorized to access the first data is a string that includes metadata related to one or more of the following: the first data, the NFp, the DRF, and the NFc. The string is signed by a digital signature. In such embodiments, verifying that the NFc is authorized to access the first data can include detecting the following matches: between the digital signature and a digital signature associated with the NFp, and between the metadata in the string and the metadata stored with the first data.

In other embodiments, the indication that the NFc is authorized to access the first data is a random string. In such embodiments, verifying that the NFc is authorized to access the first data can include the following operations: sending to the NFp a second request that includes the random string, metadata related to the first data, and metadata related to the NFc; and receiving from the NFp a second response indicating that the NFc is authorized to access the first data.

Other embodiments include NFcs, NFps, and DRFs (or network nodes hosting the same) that are configured to perform the operations corresponding to any of the exemplary methods described herein. Other embodiments also include non-transitory, computer-readable media storing computer-executable instructions that, when executed by processing circuitry associated with such NFcs, NFps, and DRFs, configure the same to perform operations corresponding to any of the exemplary methods described herein.

These and other embodiments described herein can enable an ADRF (or other data repository) to verify whether an NFc is authorized to access and receive analytics data and/or models that have been collected from an NFp (e.g., NWDAF) and stored in ADRF. This prevents ADRF from distributing proprietary and/or sensitive data to an unauthorized and/or "rogue" prospective NFc. In this manner, embodiments can improve security of analytics and/or models used in 5G networks.

These and other objects, features, and advantages of the present disclosure will become apparent upon reading the following Detailed Description in view of the Drawings briefly described below.

### BRIEF DESCRIPTION OF THE DRAWINGS

Figures 1-2 illustrate various aspects of an exemplary 5G network architecture.
Figure 3 illustrates a high-level view of the 3GPP Rel-17 Data Management Framework.
Figure 4 shows a signaling diagram for a procedure for data access authorization from an ADRF when DCCF is used.
Figures 5-6 are flow diagrams of exemplary procedures for authorization of an NFc to obtain information stored in an ADRF, according to various embodiments of the present disclosure.
Figure 7 shows an exemplary method (*e.g*., procedure) for a data consumer network function (NFc) of a communication network, according to various embodiments of the present disclosure.
Figure 8 shows an exemplary method (*e.g.*, procedure) for a data producer network function (NFp) of a communication network, according to various embodiments of the present disclosure.
Figure 9 shows an exemplary method (*e.g*., procedure) for a data repository function (DRF) of a communication network, according to various embodiments of the present disclosure.
Figure 10 shows a communication system according to various embodiments of the present disclosure.
Figure 11 shows a UE according to various embodiments of the present disclosure.
Figure 12 shows a network node according to various embodiments of the present disclosure.
Figure 13 shows host computing system according to various embodiments of the present disclosure.
Figure 14 is a block diagram of a virtualization environment in which functions implemented by some embodiments of the present disclosure may be virtualized.
Figure 15 illustrates communication between a host computing system, a network node, and a UE via multiple connections, according to various embodiments of the present disclosure.

### DETAILED DESCRIPTION

Embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

In general, all terms used herein are to be interpreted according to their ordinary meaning in the relevant technical field, unless a different meaning is clearly given and/or is implied from the context in which it is used. All references to alan/the element, apparatus, component, means, step, *etc.* are to be interpreted openly as referring to at least one instance of the element, apparatus, component, means, step, *etc*., unless explicitly stated otherwise. The operations of any methods and/or procedures disclosed herein do not have to be performed in the exact order disclosed, unless an operation is explicitly described as following or preceding another operation and/or where it is implicit that an operation must follow or precede another operation. Any feature of any embodiment disclosed herein can apply to any other disclosed embodiment, as appropriate. Likewise, any advantage of any embodiment described herein can apply to any other disclosed embodiment, as appropriate.

Furthermore, the following terms are used throughout the description given below:
- Radio Access Node: As used herein, a "radio access node" (or equivalently "radio network node," "radio access network node," or "RAN node") can be any node in a radio access network (RAN) that operates to wirelessly transmit and/or receive signals. Some examples of a radio access node include, but are not limited to, a base station (*e.g*., gNB in a 3GPP 5G/NR network or an enhanced or eNB in a 3GPP LTE network), base station distributed components (*e.g*., CU and DU), a high-power or macro base station, a low-power base station (*e.g*., micro, pico, femto, or home base station, or the like), an integrated access backhaul (IAB) node, a transmission point (TP), a transmission reception point (TRP), a remote radio unit (RRU or RRH), and a relay node.
- Core Network Node: As used herein, a "core network node" is any type of node in a core network. Some examples of a core network node include, e.g., a Mobility Management Entity (MME), a serving gateway (SGW), a PDN Gateway (P-GW), a Policy and Charging Rules Function (PCRF), an access and mobility management function (AMF), a session management function (SMF), a user plane function (UPF), a Charging Function (CHF), a Policy Control Function (PCF), an Authentication Server Function (AUSF), a location management function (LMF), or the like.
- Wireless Device: As used herein, a "wireless device" (or "WD" for short) is any type of device that is capable, configured, arranged and/or operable to communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with the term "user equipment" (or "UE" for short), with both of these terms having a different meaning than the term "network node".
- Radio Node: As used herein, a "radio node" can be either a "radio access node" (or equivalent term) or a "wireless device."
- Network Node: As used herein, a "network node" is any node that is either part of the radio access network (*e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g*., administration) in the cellular communications network.
- Node: As used herein, the term "node" (without prefix) can be any type of node that can in or with a wireless network (including RAN and/or core network), including a radio access node (or equivalent term), core network node, or wireless device. However, the term "node" may be limited to a particular type (e.g., radio access node) based on its specific characteristics in any given context.

The above definitions are not meant to be exclusive. In other words, various ones of the above terms may be explained and/or described elsewhere in the present disclosure using the same or similar terminology. Nevertheless, to the extent that such other explanations and/or descriptions conflict with the above definitions, the above definitions should control.

Note that the description given herein focuses on a 3GPP cellular communications system and, as such, 3GPP terminology or terminology similar to 3GPP terminology is generally used. However, the concepts disclosed herein are not limited to a 3GPP system, and can be applied in any system that can benefit from the concepts, principles, and/or embodiments described herein.

Figure 2 shows an exemplary architecture of a 5G network (200) with service-based interfaces. The architecture shown in Figure 2 includes the following NFs:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Network Data Analytics Function (NWDAF) with Nnwdaf interface - provides network analytics information (e.g., statistical information of past events and/or predictive information) to other NFs on a network slice instance level.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NGRAN.

The Unified Data Management (UDM) function supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition to the UDM, the UDR supports storage and retrieval of policy data by the PCF, as well as storage and retrieval of application data by NEF.

The NRF allows every NF to discover the services offered by other NFs, and Data Storage Functions (DSF) allow every NF to store its context. In addition, the NEF provides exposure of capabilities and events of the 5GC to AFs within and outside of the 5GC. For example, NEF provides a service that allows an AF to provision specific subscription data (*e.g*., expected UE behavior) for various UEs.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol (N1 interface in Figure 2). Security for the communications over this these strata is provided by the NAS protocol (for NAS) and the PDCP protocol (for AS).

3GPP Rel-17 enhances the SBA by adding a Data Management Framework that includes a Data Collection Coordination Function (DCCF) and a messaging framework, which is defined in detail in 3GPP TR 23.700-91 (v17.0.0) section 6.9. The Data Management Framework is backward compatible with a Rel-16 NWDAF function, described above.

For Rel-17, the baseline for services offered by the DCCF (e.g., to an NWDAF Analytics Function) are the Rel-16 NF Services used to obtain data. For example, the baseline for the DCCF service used by an NWDAF consumer to obtain UE mobility data is *Namf_EventExposure.* The 5G system architecture also allows any NF to obtain analytics from an NWDAF using a DCCF function and associated Ndccf services. The NWDAF can also perform storage and retrieval of analytics information from an Analytics Data Repository Function (ADRF).

A Rel-16 NWDAF can coexist with a Rel-17 NWDAF and the Data Management Framework. A Rel-16 NWDAF continues to request data directly from NFs without using the Data Management Framework and provides analytics to consumers that discover the Rel-16 NWDAF. A Rel-17 NWDAF can request data from the Data Management Framework, and if the data is not collected already, the Data Management Framework would request the data from a data source. In other words, a data source would independently send Data to the Rel-16 NWDAF that sent a request directly to the data Source, and to the Data Management Framework that sent a request for the Rel-17 NWDAF.

In Rel-17, the NWDAF is decomposed by moving Data Collection (including the task of identifying the Data Source) to the Data Management Framework. The Rel-17 NWDAF requests data from the Data Management Framework but may not query other NFs (e.g., NRF, UDM, etc.) to determine which NF instance serves a UE, nor need it be concerned about life cycles of Data Source NFs, as was the case for Rel-16 NWDAF. This decomposition also allows other NFs to obtain data via the Data Management Framework and avoids duplicate data collection from the same data source. The Rel-17 NWDAF (without Data Collection) may be referred to as the "NWDAF Analytics Function."

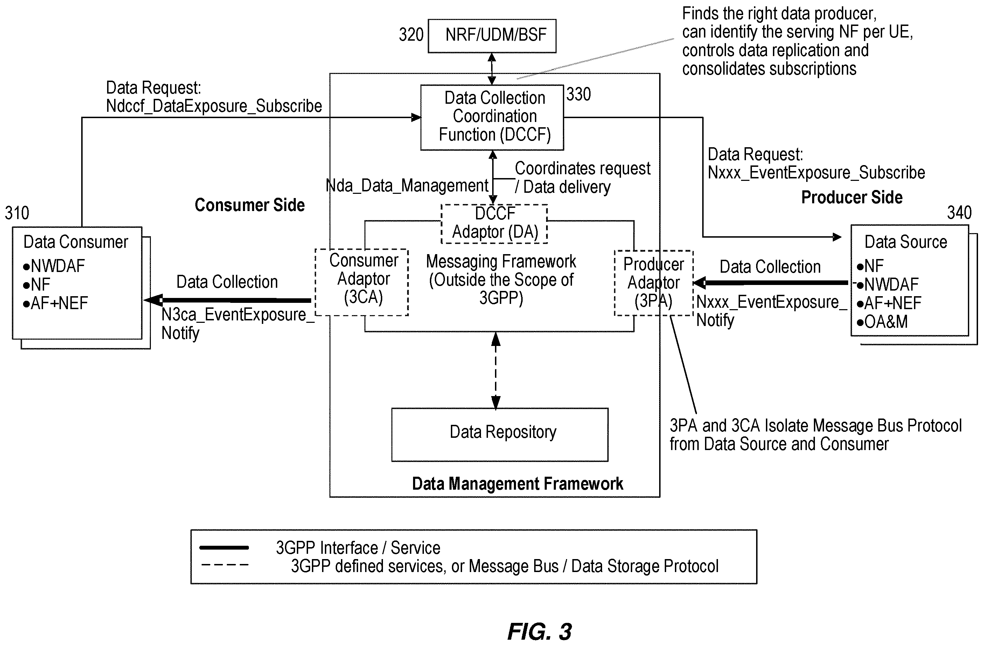

Figure 3 illustrates a high-level view of the Rel-17 Data Management Framework. The main components are the DCCF (330) that communicates with other NFs, the Messaging Framework, and a Data Repository. The DCCF optionally includes a DCCF Adaptor (DA) used to communicate with the Messaging Framework, which optionally includes a Consumer Adaptor (3CA) and/or a Producer Adaptor (3PA) used to communicate with a Data Consumer (310) and a Data Source (340), respectively. The DA, 3CA, and 3PA may be standalone or combined with the DCCF, Data Consumer, and Data Source, respectively. Exemplary Data Consumers include the NWDAF Analytics Function an NF requesting analytics, but as with other NF services, nothing precludes other Consumer NFs. The Data Management Framework is compatible with both a 3GPP-defined Data Repository Function for ML/Analytics and Data Repositories that are not 3GPP-defined.

DCCF is a control-plane function that coordinates data collection and triggers data delivery to Data Consumers. A DCCF may support multiple Data Sources, Data Consumers, and Message Frameworks. However, to prevent duplicate data collection, each Data Source is associated with only one DCCF. DCCF provides the 3GPP defined *Ndccf_DataExposure* Service to Data Consumers and uses the services of Data Sources to obtain data. Although Figure 3 shows one DCCF for the 5GC, there can be multiple DCCF instances associated with different network slices, different geographic regions where Data Sources reside, or different types of Data Sources. A DCCF registers with NRF and is discovered by Consumers (or SCP) using the registration and discovery procedures defined for the NF Service Framework in 3GPP TS 23.502 (v16.7.0).

DCCF receives data requests from Data Consumers via the *Ndccf_DataExposure* service. If a Data Source is not specified in the Data Request, DCCF determines the Data Source that can provide the data requested by the Data Consumer. For example, if the request is for UE-specific data, DCCF may query the other NFs (320, e.g., NRF, UDM, etc.) to determine which NF instance is serving the UE. If the Data Source is specified in the Data Request (e.g., the Data Consumer is configured with Data Sources), DCCF checks whether the data is already collected from the Data Source. If not, DCCF will request the data from the specified Data Source. If the requested data is partially covered by existing subscriptions with the Data Source, the DCCF sends a request to the Data Source to modify one or more subscriptions to accommodate both the previous requests for data and the new request for data.

Additionally, DCCF may determine if the requested data is currently being produced by any Data Source and being provided to the Messaging Framework. If the requested data is not being produced and/or provided, DCCF sends a new subscription/request towards the Data Source to trigger a new data collection, and DCCF then subscribes with the messaging framework for the Data Consumer to receive future notifications associated with the desired Data Source.

While the Messaging Framework is not standardized by 3GPP, a Messaging Framework Adaptor NF (MFAF) offers 3GPP-defined services that allow the 5GS to interact with the Messaging Framework. Internally, the Messaging Framework may for example support a pub-sub pattern, where received data are published to the Messaging Framework and requests from 3GPP Consumers result in Messaging Framework specific subscriptions. Alternatively, the Messaging Framework may support other protocols outside of the scope of 3GPP.

DCCF uses the Nmfaf_3daData Management service to convey information so that the Messaging Framework can recognize data that are received from a Data Source. The MFAF can obtain data received by the Messaging Framework, process and format the data according to instructions for each consumer/notification endpoint, and send notifications or responses to the Data Consumers.

When data is received (e.g., due to event notification), the Messaging Framework processes it according to the formatting and processing instructions for each consumer / notification endpoint before sending the respective notifications. Note that notifications sent via the *Nmfaf_3caDataManagement* service have the same content as those sent via a *Ndccf_DataManagement* service for data delivery via the DCCF.

The *Nnwdaf_DataManagement* service enables consumers to subscribe/unsubscribe for datalanalytics produced by NWDAF, be notified about data exposed by NWDAF, or fetch the subscribed data. It enables consumers to request generation of bulk data for Event IDs and/or Analytics IDs and to retrieve the requested data.

More specifically, the *Nnwdaf_DataManagement Subscribe* service operation of the *Nnwdaf_DataManagement* service enables consumers to subscribe to receive data or historical analytics (which is regarded as a kind of data). If the data is already defined in NWDAF, then the subscription is updated. The required service operation inputs include Data Specification or Analytics Specification, Notification Target Address, and Notification Correlation ID.

When the required data is a bulk data for Event IDs received from NFs, the Data Specification includes a set of Event IDs, Event Filter Information, Target of Event Reporting, and bulk data type. When the required data is a bulk data for Analytics ID, the Data Specification includes Target of Reporting with the set of Analytics ID(s) to generate bulk data, bulk data type, analytics stage, Filter Information with Target of Analytics Information, and Analytics Filter Information. These parameters are further defined in 3GPP 23.288 (v17.3.0) section 6.2.6.1.

When the required data is historical analytics, the Analytics Specification is included in the required input parameters and identifies the historical analytics to be collected, based on Analytics ID(s), Target of Analytics Reporting, Analytics Filter information and other input parameters for NWDAF services. These parameters are further defined in 3GPP 23.288 (v17.3.0) sections 7.2 and 7.3.

In any case, event filter information, target of event reporting, and bulk data type can be provided per individual Event ID in a set of Event IDs to generate bulk data. Likewise, bulk data type, analytics stage, target of analytics information, analytics filter information can be provided per individual Analytics ID in a set of Analytics IDs to generate bulk data.

Optional inputs to the *Nnwdaf_DataManagement Subscribe* service operation include service operation, bulk data formatting and processing, data source, ADRF information to store data used for generated bulk data, and ADRF ID or NWDAF ID (or ADRF Set ID or NWDAF Set ID) storing historical data to be used for bulk data generation. The bulk data formatting and processing parameters include parameters defined in 3GPP 23.288 (v17.3.0) section 5A.4 as well as periodic bulk data notification, feature type, time window, minimum and/or maximum number of samples, fetch flag, bulk data deadline, notification event clubbing, and processing rules. The following inputs can be provided per individual Event ID or Analytics ID included in the data specification: service operation (in the case of Event IDs), bulk data formatting and processing, data source, and ADRF information to store data used for generated bulked data, ADRF ID or NWDAF ID (or ADRF Set ID or NWDAF Set ID) storing historical data to be used for bulked data generation.

When the subscription is accepted, the output of *Nnwdaf_DataManagement Subscribe* service operation is a subscription correlation ID (required for management of the requested subscription). When the subscription is not accepted, the output of *Nnwdaf_DataManagement Subscribe* service operation is an error response. For example, when the target of event reporting or target of reporting input parameter is a subscription permanent identifier (SUPI) or a generic public subscription identifier (GPSI), an error is sent to the consumer when the subscription request is not accepted, e.g., due to no user consent. As another example, when the target of event reporting or target of reporting input parameter is an internal group ID, a list of SUPIs/GPSI(s), or any UE, no error is sent but a SUPI or GPSI is skipped when user consent is not granted.

3GPP TR 33.866 (v17.0.0) section 6.11 describes a solution (called "solution #11") for data access authorization from ADRF when DCCF is used. In particular, this solution addresses the scenario of data received from a data producer (NFp) being stored in the ADRF based on a request from a DCCF. When the data are later retrieved, the DCCF may provide the stored data to a non-authorized consumer if requested.

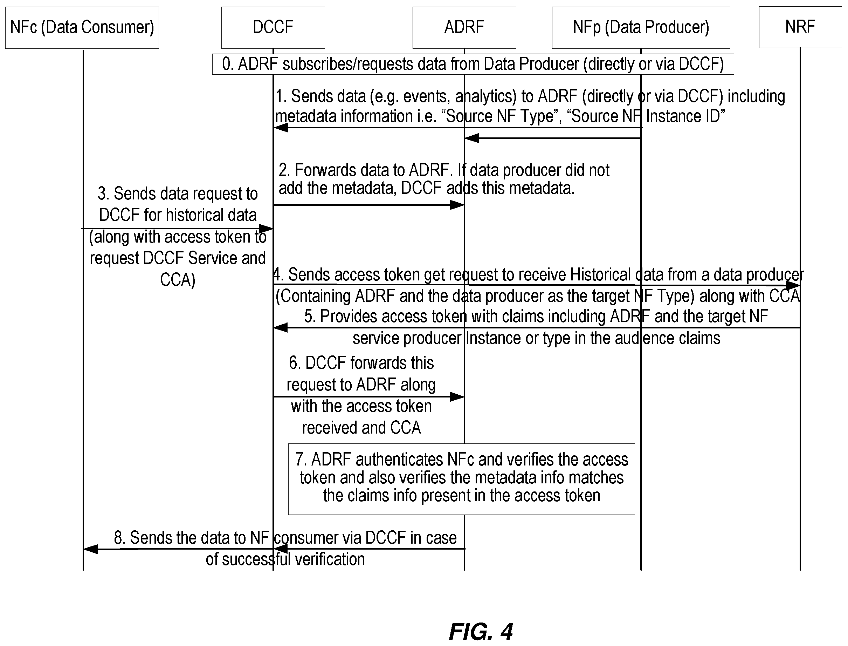

Figure 4 shows a signaling diagram for a procedure based on solution #11. In this arrangement, a NF service (or data) consumer (NFc, e.g., NWDAF) accesses the services of DCCF using the existing SBI mechanisms.

In operation 0, as a pre-condition, ADRF subscribes/requests data from a NF service (or data) producer (NFp), directly or indirectly via DCCF. This subscription can be based on a request by DCCF or the NFc. Alternatively, the Messaging Framework may be configured by DCCF to forward a copy of the data to ADRF.

In operation 1, the NFp sends the data to ADRF for storage and archiving, per subscription. When sending the data to the ADRF, the NFp appends its own NF type and NF Instance ID as metadata, which is archived along with the data by ADRF. If NFp does not add this metadata, DCCF may add it before sending the data to ADRF for archiving in operation 2. Note that operations 1-2 ensure that information about the NFp from which the data was collected is present in the ADRF. If the information is already present, operations 1-2 are not needed and the procedure defined in 3GPP TS 23.288 (v17.5.0) section 6.2.6.3.3 is followed instead.

In operation 3, the NFc sends a request to DCCF for analytics data stored in ADRF (as specified in 3GPP TS 23.288 (v17.5.0) section 6.2.6.3.3), optionally including an NF Type (or NF Instance ID) of the target NFp. The request also contains an access token for requesting services from DCCF and CCA of the NFc. In operation 4, after verifying that NFc is authorized to access the DCCF services, DCCF sends to NRF an access token request to collect historical data from data producer(s). DCCF includes information identifying the target NFs (i.e., ADRF, NFp), the source NF (i.e., DCCF, NFc), and the CCA provided by the NFc.

In operation 5, after verifying the request, NRF authorizes NFc to request the data and adds in the access token claims the NF Type (or the NF Instance ID) of the NF Service Producers (i.e., ADRF, NFp). In operation 6, DCCF forwards the analytics data request to ADRF along with the access token received in operation 5. Upon receiving the request, in operation 7 the ADRF performs two verifications. First, it verifies the access token as described in 3GPP TS 33.501 (v17.5.0). Next, ADRF verifies that the metadata of the requested data (e.g., source NF type or NF Instance ID) matches the metadata that was earlier appended by the NFp (or DCCF or MF AF) when archiving the data. In operation 8, ADRF sends the data to NFc via DCCF in case of successful verification.

However, Applicants have recognized that the metadata such as Source NF type or NF Instance ID is not enough to verify that NFc is authorized is authorized to access the requested analytics data via DCCF. For example, the solution shown in Figure 4 only considers that NFc and NFp are the same NF instance or that they belong to the same NF type (e.g., SMF, AMF).

However, it is possible that the NFc and NFp may belong to different NF types, and NFp may not know in advance all NF types that may want to consume the data that it stores in ADRF. For example, an NWDAF may want to consume UE mobility data stored in ADRF by an AMF, which is not aware of this NFc when it appends the metadata before sending the UE mobility data to ADRF.

Furthermore, similar problems may exist if the DCCF is omitted, i.e., when NFp/NFc access ADRF directly. Additionally, there may be different authorization issues associated with storing/retrieving artificial intelligence/machine learning (AI/ML) modes in ADRF. In fact, such AI/ML models may be more sensitive and/or proprietary than analytics data, such that it is even more important to prevent unauthorized parties from obtaining them.

Embodiments of the present disclosure address these and other problems, issues, and/or difficulties by providing novel, flexible, and efficient techniques for authorization of prospective consumers (NFc) of analytics data and/or models stored in ADRF or any other NF that may store such information (which will be called "ADRF" for simplification).

At a high level, two types of techniques are disclosed. In the first type, NFc gets a token or a signed string from NFp, including some metadata such as NFc instance ID and datalmodel ID. ADRF checks the token, using public key or certificate of NFp for verification. In the second type, NFp provides a random string to NFc, which provides this string to ADRF. Based on this string, ADRF verifies from that NFc access to the datalmodel is granted by NFp.

Embodiments can provide various benefits and/or advantages. For example, embodiments enable an ADRF to easily verify whether an NFc is authorized to access and receive analytics data and/or models that have been collected from an NFp (e.g., NWDAF) and stored in ADRF. This prevents ADRF from distributing proprietary and/or sensitive data to an unauthorized and/or "rogue" prospective NFc. Thus, embodiments can improve security of analytics and/or models used in 5G networks.

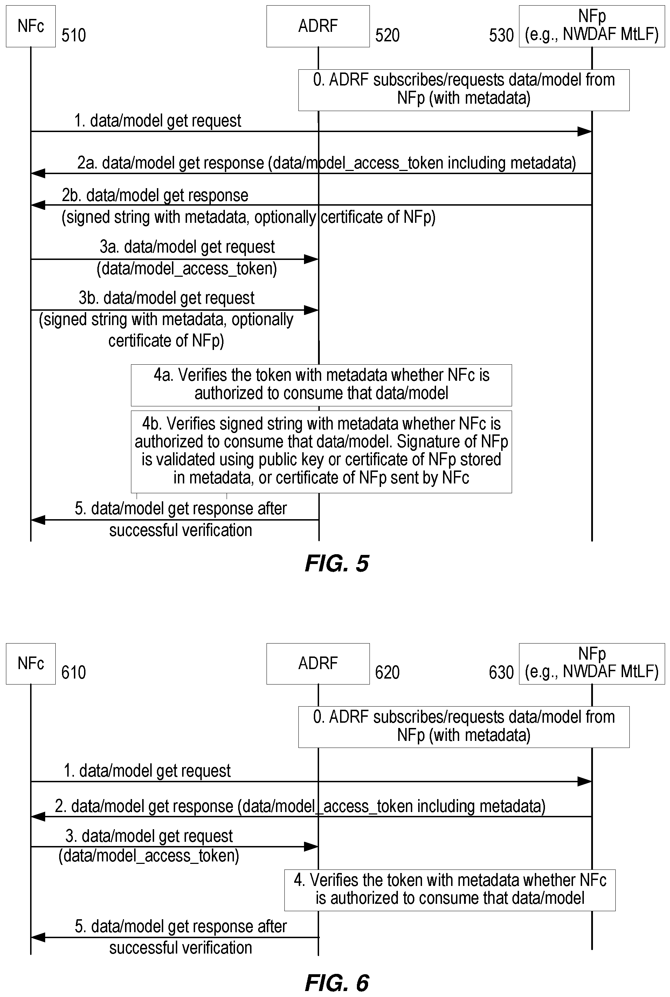

Figure 5 is a flow diagram of an exemplary procedure for authorization of an NFc to obtain information stored in an ADRF, according to some embodiments of the present disclosure. In particular, the procedure in Figure 5 involves an NFc (or data consumer, 510), an ADRF (520), and a NFp (or data producer, 530). For brevity, these elements and/or functions will be referred to in the following description without their respective reference numbers. Although operations shown in Figure 5 are given numerical labels, this is intended to facilitate explanation rather than to require or imply any strict ordering of the operations, unless specifically stated otherwise.

In operation 0, the ADRF obtains and stores analytics data and/or model, including some metadata such as DataID, ModelID, Storage Transaction Identifier, Service Operation, Analytics Specification, Data Specification, Time Window, NF Consumer Type (optional), NF Consumer ID (optional), NF producer Type, NF producer ID, etc.

In operation 1, NFc sends a request for the analytics data and/or model to NFp (e.g., NWDAF). Note that current SBA mechanisms can be used for authentication and authorization of NFc for services provided by the NFp. Because the analytics data and/or model is already stored in ADRF, there are two options (labelled 2a and 2b) for NFp response.

In operation 2a, NFp sends directly to NFc an OAuth 2.0 access token including metadata of the requested analytics data and/or model, such as DataID, ModelID, Storage Transaction Identifier, Service Operation, Analytics Specification, Data Specification, Time Window, NF Consumer Type (optional), NF Consumer ID (optional), NF producer Type, NF producer ID, etc. This token can be used by NFc to retrieve the datalmodel from ADRF.

In operation 2b, NFp sends directly to NFc a signed string including metadata of the requested analytics data and/or model, such as any of the metadata mentioned above for operation 2a. The signed stringed can be used by NFc directly to retrieve the datalmodel from ADRF. As one option, the NFp public key can also be included in the metadata. As another option, public key infrastructure (PKI) can be used. For example, the NFp certificate can be stored in the metadata or provided separately by the NFp to the NFc. In either case, the NFc can provide the NFp certificate to the ADRF.

In operation 3a (corresponding to 2a), NFc provides the access token to ADRF when requesting the corresponding analytics data and/or model. In operation 3b (corresponding to 2b), NFc provides the signed string and public key or certificate to ADRF when requesting the corresponding analytics data and/or model. In operation 4, ADRF checks whether NFc is authorized to access the requested analytics data and/or model, based on the information received in 3a or 3b.

For example, in operation 4a (corresponding to 2a/3a), ADRF checks the access token to ensure that the claims therein match the metadata of the requested datalmodel. Alternately, in operation 4b (corresponding to 2b/3b), ADRF checks the signed string to ensure the claims in the token matches the metadata of the requested datalmodel. If the NFp public key is stored in the metadata, ADRF checks the validity of signature using this public key. If the NFp certificate is stored in the metadata, ADRF checks the certificate against NFp certificate in PKI.

In operation 5, based on verifying that the NFc is authorized, the ADRF provides the requested analytics data and/or model to NFc.

Figure 6 is a flow diagram of another exemplary procedure for authorization of an NFc to obtain information stored in an ADRF, according to other embodiments of the present disclosure. In particular, the procedure in Figure 6 involves an NFc (or data consumer, 610), an ADRF (620), and a NFp (or data producer, 630). For brevity, these elements and/or functions will be referred to in the following description without their respective reference numbers. Although operations shown in Figure 5 are given numerical labels, this is intended to facilitate explanation rather than to require or imply any strict ordering of the operations, unless specifically stated otherwise.

In operation 0, the ADRF obtains and stores analytics data and/or model, including some metadata such as DataID, ModelID, Storage Transaction Identifier, Service Operation, Analytics Specification, Data Specification, Time Window, NF Consumer Type (optional), NF Consumer ID (optional), NF producer Type, NF producer ID, etc.

In operation 1, NFc sends a request for the analytics data and/or model to NFp (e.g., NWDAF). Note that current SBA mechanisms can be used for authentication and authorization of NFc for services provided by NFp. In operation 2, NFp generates a random string token for NFc and sends the random string token to NFc in response. In operation 3, when requesting the analytics data and/or model, NFc provides the random string token to ADRF together with identifier(s) of the analytics data and/or model.

In operation 4, ADRF sends the received random string token and identifier to NFp together with an NFc Instance ID. NFp verifies whether the random string token is identical to the one provided to NFc in operation 2. NFp notifies ADRF of the verification results. In operation 5, based on verifying that NFc is authorized, the ADRF provides the requested analytics data and/or model to NFc.

As an alternative to the embodiments shown in Figure 6, NFc can directly sends its request in operation 1 directly to ADRF, which then can verify NFc authorization with NFp. Then ADRF checks this request (including Consumer NF Type and/or NFc Instance ID, data/model ID) with NFp.

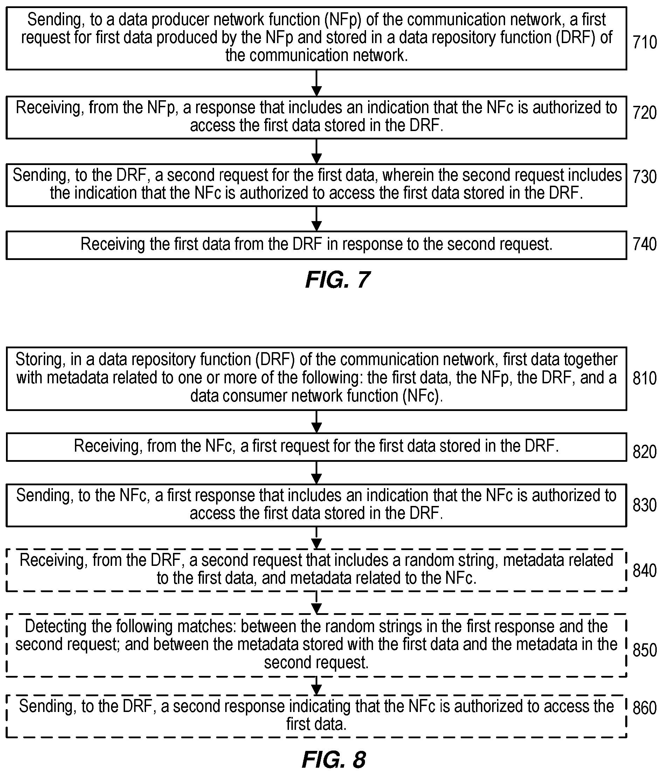

The embodiments described above can be further illustrated with reference to Figures 7-9, which depict exemplary methods (*e.g*., procedures) for a data consumer NF (NFc), a data producer NF (NFp), and a data repository function (DRF), respectively. Put differently, various features of the operations described below correspond to various embodiments described above. The exemplary methods shown in Figures 7-9 can be used cooperatively (e.g., with each other and with other procedures described herein) to provide benefits, advantages, and/or solutions to problems described herein. Although the exemplary methods are illustrated in Figures 7-9 by specific blocks in particular orders, the operations corresponding to the blocks can be performed in different orders than shown and can be combined and/or divided into blocks and/or operations having different functionality than shown. Optional blocks or operations are indicated by dashed lines.

In particular, Figure 7 illustrates an exemplary method (*e.g.*, procedure) for a data consumer NF (NFc) of a communication network (e.g., 5GC), according to various embodiments of the present disclosure. The exemplary method shown in Figure 7 can be performed by any appropriate NF (or network node hosting the same) such as described elsewhere herein.

The exemplary method can include the operations of block 710, where the NFc can send, to a data producer network function (NFp) of the communication network, a first request for first data produced by the NFp and stored in a data repository function (DRF, e.g., ADRF) of the communication network. The exemplary method can also include the operations of block 720, where the NFc can receive, from the NFp, a response that includes an indication that the NFc is authorized to access the first data stored in the DRF. The exemplary method can also include the operations of block 730, where the NFc can send, to the DRF, a second request for the first data. The second request includes the indication that the NFc is authorized to access the first data stored in the DRF. The exemplary method can also include the operations of block 740, where the NFc can receive the first data from the DRF in response to the second request.

In some embodiments, the response from the NFc also includes information identifying the DRF. In some of these embodiments, the information identifying the DRF comprises an identity of the DRF or an address of the DRF.

In some embodiments, the indication that the NFc is authorized to access the first data stored in the DRF is an access token or a string signed with a digital signature of the NFp. In some of these embodiments, the access token or the signed string includes metadata related to one or more of the following: the first data, the NFc, the NFp, and the DRF. In some variants, the following apply:
- the metadata related to the first data includes one or more of the following: one or more identifiers of the first data, and one or more specifications of the first data;
- the metadata related to the NFc includes one of more of the following: a type of the NFc, and an instance identifier of the NFc;
- the metadata related to the NFp includes one of more of the following: a type of the NFp, and an instance identifier of the NFp; and
- the metadata related to the DRF includes one or more of the following: a service operation for accessing the first data, a time window for accessing the first data, and a storage transaction identifier associated with the first data.

In other embodiments, the indication that the NFc is authorized to access the first data stored in the DRF is a random string and the second request also includes metadata related to the first data and metadata related to the NFc. In some of these embodiments, the following apply:
- the metadata related to the first data includes one or more of the following: one or more identifiers of the first data, and one or more specifications of the first data; and
- the metadata related to the NFc includes one of more of the following: a type of the NFc, and an instance identifier of the NFc.

In some embodiments, the first data includes one or more of the following: analytics data, and one or more AI/ML models.

In addition, Figure 8 illustrates an exemplary method (*e.g*., procedure) for a data producer NF (NFp) of a communication network (e.g., 5GC), according to various embodiments of the present disclosure. The exemplary method shown in Figure 8 can be performed by any appropriate NF (or network node hosting the same) such as described elsewhere herein.

The exemplary method can include the operations of block 810, where the NFp can store, in a DRF (e.g., ADRF) of the communication network, first data stored together with metadata related to one or more of the following: the first data, the NFp, the DRF, and a data consumer network function (NFc). The exemplary method can also include the operations of block 820, where the NFp can receive from the NFc a first request for the first data stored in the DRF. The exemplary method can also include the operations of block 830, where the NFp can send, to the NFc, a first response that includes an indication that the NFc is authorized to access the first data stored in the DRF.

In some embodiments, the first response to the NFp also includes information identifying the DRF. In some of these embodiments, the information identifying the DRF comprises an identity of the DRF or an address of the DRF. In some embodiments, the following apply:
- the metadata related to the first data includes one or more of the following: one or more identifiers of the first data, and one or more specifications of the first data;
- the metadata related to the NFc includes one of more of the following: a type of the NFc, and an instance identifier of the NFc;
- the metadata related to the NFp includes one of more of the following: a type of the NFp, and an instance identifier of the NFp; and
- the metadata related to the DRF includes one or more of the following: a service operation for accessing the first data, a time window for accessing the first data, and a storage transaction identifier associated with the first data.

In some embodiments, the indication that the NFc is authorized to access the first data stored in the DRF is an access token or a string signed with a digital signature of the NFp. In some of these embodiments, the access token or the signed string includes the metadata that was stored together with the first data.

In other embodiments, the indication that the NFc is authorized to access the first data stored in the DRF is a random string. In such embodiments, the exemplary method can also include the operations of blocks 840-860. In block 840, the NFp can receive from the DRF a second request that includes a random string, metadata related to the first data, and metadata related to the NFc. In blocks 850-860, the NFp can send to the DRF a second response indicating that the NFc is authorized to access the first data, based on detecting the following matches: between the random strings in the first response and the second request; and between the metadata stored with the first data and the metadata in the second request.

In some embodiments, the first data includes one or more of the following: analytics data, and one or more AI/ML models.

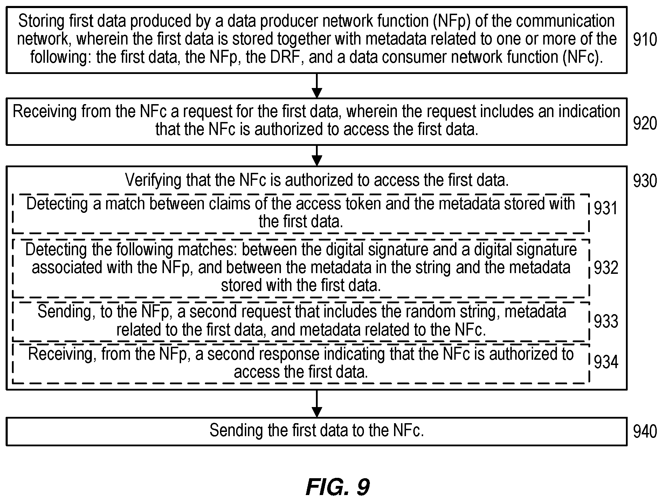

In addition, Figure 9 illustrates an exemplary method (*e.g*., procedure) for a data repository function (DRF) of a communication network (e.g., 5GC), according to various embodiments of the present disclosure. The exemplary method shown in Figure 9 can be performed by an ADRF or other type of DRF (or network node hosting the same) such as described elsewhere herein.

The exemplary method can include the operations of block 910, where the DRF can store first data produced by an NFp of the communication network. The first data is stored together with metadata related to one or more of the following: the first data, the NFp, the DRF, and an NFc. The exemplary method can also include the operations of block 920, where the DRF can receive from the NFc a request for the first data. The request includes an indication that the NFc is authorized to access the first data. The exemplary method can also include the operations of blocks 930-940, where based on verifying that the NFc is authorized to access the first data, the DRF can send the first data to the NFc.

In some embodiments, the following apply:
- the metadata related to the first data includes one or more of the following: one or more identifiers of the first data, and one or more specifications of the first data;
- the metadata related to the NFc includes one of more of the following: a type of the NFc, and an instance identifier of the NFc;
- the metadata related to the NFp includes one of more of the following: a type of the NFp, and an instance identifier of the NFp; and
- the metadata related to the DRF includes one or more of the following: a service operation for accessing the first data, a time window for accessing the first data, and a storage transaction identifier associated with the first data.

In some embodiments, the indication that the NFc is authorized to access the first data is an access token that includes metadata related to one or more of the following: the first data, the NFp, the DRF, and the NFc. In such embodiments, verifying that the NFc is authorized to access the first data in block 930 can include the operations of sub-block 931, where the DRF can detect a match between claims of the access token and the metadata stored with the first data.

In other embodiments, the indication that the NFc is authorized to access the first data is a string that includes metadata related to one or more of the following: the first data, the NFp, the DRF, and the NFc. The string is signed by a digital signature. In such embodiments, verifying that the NFc is authorized to access the first data in block 930 can include the operations of sub-block 932, where the DRF can detect the following matches: between the digital signature and a digital signature associated with the NFp, and between the metadata in the string and the metadata stored with the first data.

In other embodiments, the indication that the NFc is authorized to access the first data is a random string. In such embodiments, verifying that the NFc is authorized to access the first data in block 930 can include the operations of sub-blocks 933-934, where the DRF can send to the NFp a second request that includes the random string, metadata related to the first data, and metadata related to the NFc; and receive from the NFp a second response indicating that the NFc is authorized to access the first data.

In some embodiments, the first data includes one or more of the following: analytics data, and one or more AI/ML models.

Although various embodiments are described herein above in terms of methods, apparatus, devices, computer-readable media, etc., the person of ordinary skill will readily comprehend that such methods can be embodied by various combinations of hardware and software in various systems, communication devices, computing devices, control devices, apparatuses, non-transitory computer-readable media, *etc.*

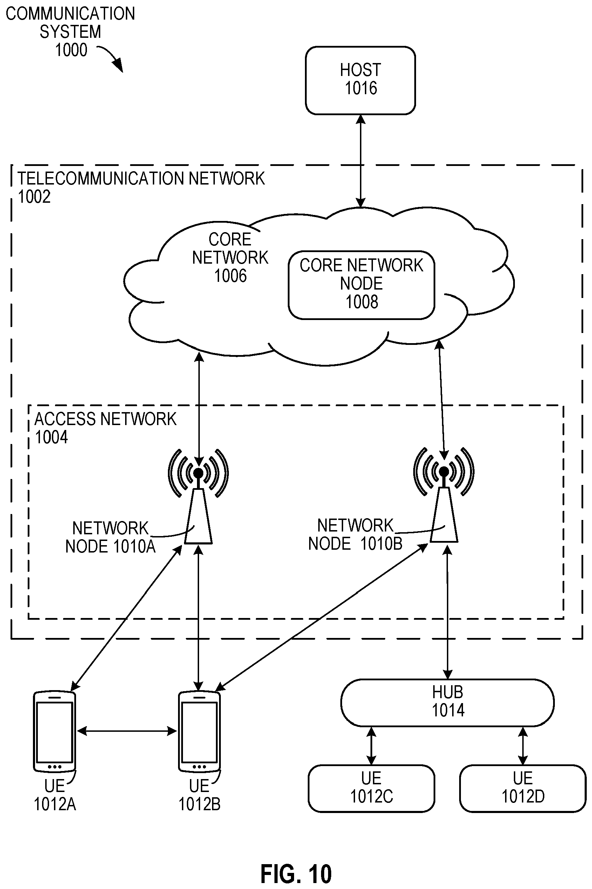

Figure 10 shows an example of a communication system 1000 in accordance with some embodiments. In this example, communication system 1000 includes a telecommunication network 1002 that includes an access network 1004 (e.g., RAN) and a core network 1006, which includes one or more core network nodes 1008. Access network 1004 includes one or more access network nodes, such as network nodes 1010a-b (one or more of which may be generally referred to as network nodes 1010), or any other similar 3GPP access node or non-3GPP access point. Network nodes 1010 facilitate direct or indirect connection of UEs, such as by connecting UEs 1012a-d (one or more of which may be generally referred to as UEs 1012) to core network 1006 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, communication system 1000 may include any number of wired or wireless networks, network nodes, UEs, and/or any other components or systems that may facilitate or participate in the communication of data and/or signals whether via wired or wireless connections. Communication system 1000 may include and/or interface with any type of communication, telecommunication, data, cellular, radio network, and/or other similar type of system.

UEs 1012 may be any of a wide variety of communication devices, including wireless devices arranged, configured, and/or operable to communicate wirelessly with network nodes 1010 and other communication devices. Similarly, network nodes 1010 are arranged, capable, configured, and/or operable to communicate directly or indirectly with UEs 1012 and/or with other network nodes or equipment in telecommunication network 1002 to enable and/or provide network access, such as wireless network access, and/or to perform other functions, such as administration in telecommunication network 1002.

In the depicted example, core network 1006 connects network nodes 1010 to one or more hosts, such as host 1016. These connections may be direct or indirect via one or more intermediary networks or devices. In other examples, network nodes may be directly coupled to hosts. Core network 1006 includes one or more core network nodes (e.g., 1008) that are structured with hardware and software components. Features of these components may be substantially similar to those described with respect to the UEs, network nodes, and/or hosts, such that the descriptions thereof are generally applicable to the corresponding components of core network node 1008. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), Analytics Data Repository Function (ADRF), network repository function (NRF), network data analytics function (NWDAF), and/or a User Plane Function (UPF).

Host 1016 may be under the ownership or control of a service provider other than an operator or provider of access network 1004 and/or telecommunication network 1002, and may be operated by the service provider or on behalf of the service provider. Host 1016 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, communication system 1000 of Figure 10 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, telecommunication network 1002 is a cellular network that implements 3GPP standardized features. Accordingly, telecommunication network 1002 may support network slicing to provide different logical networks to different devices that are connected to telecommunication network 1002. For example, telecommunication network 1002 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, UEs 1012 are configured to transmit and/or receive information without direct human interaction. For instance, a UE may be designed to transmit information to access network 1004 on a predetermined schedule, when triggered by an internal or external event, or in response to requests from access network 1004. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN (Evolved-UMTS Terrestrial Radio Access Network) New Radio - Dual Connectivity (EN-DC).

In the example, hub 1014 communicates with access network 1004 to facilitate indirect communication between one or more UEs (e.g., UE 1012c and/or 1012d) and network nodes (e.g., network node 1010b). In some examples, hub 1014 may be a controller, router, content source and analytics, or any of the other communication devices described herein regarding UEs. For example, hub 1014 may be a broadband router enabling access to core network 1006 for the UEs. As another example, hub 1014 may be a controller that sends commands or instructions to one or more actuators in the UEs. Commands or instructions may be received from the UEs, network nodes 1010, or by executable code, script, process, or other instructions in hub 1014. As another example, hub 1014 may be a data collector that acts as temporary storage for UE data and, in some embodiments, may perform analysis or other processing of the data. As another example, hub 1014 may be a content source. For example, for a UE that is a VR headset, display, loudspeaker or other media delivery device, hub 1014 may retrieve VR assets, video, audio, or other media or data related to sensory information via a network node, which hub 1014 then provides to the UE either directly, after performing local processing, and/or after adding additional local content. In still another example, hub 1014 acts as a proxy server or orchestrator for the UEs, in particular in if one or more of the UEs are low energy IoT devices.

Hub 1014 may have a constant/persistent or intermittent connection to network node 1010b. Hub 1014 may also allow for a different communication scheme and/or schedule between hub 1014 and UEs (e.g., UE 1012c and/or 1012d), and between hub 1014 and core network 1006. In other examples, hub 1014 is connected to core network 1006 and/or one or more UEs via a wired connection. Moreover, hub 1014 may be configured to connect to an M2M service provider over access network 1004 and/or to another UE over a direct connection. In some scenarios, UEs may establish a wireless connection with network nodes 1010 while still connected via hub 1014 via a wired or wireless connection. In some embodiments, hub 1014 may be a dedicated hub - that is, a hub whose primary function is to route communications to/from the UEs from/to network node 1010b. In other embodiments, hub 1014 may be a non-dedicated hub - that is, a device which is capable of operating to route communications between the UEs and network node 1010b, but which is additionally capable of operating as a communication start and/or end point for certain data channels.

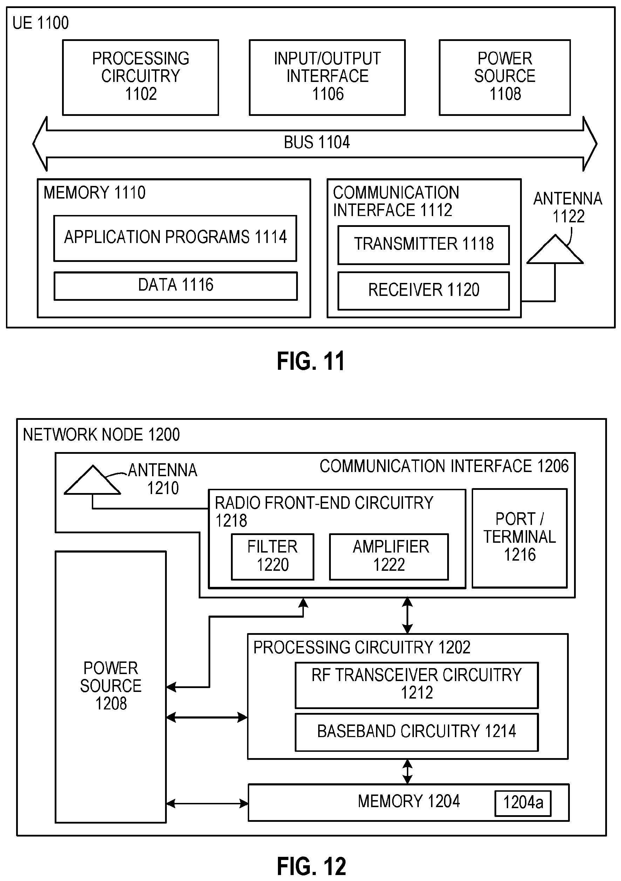

Figure 11 shows a UE 1100 in accordance with some embodiments. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by 3GPP, including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

UE 1100 includes processing circuitry 1102 that is operatively coupled via bus 1104 to input/output interface 1106, power source 1108, memory 1110, communication interface 1112, and possibly other components. Certain UEs may utilize all or a subset of the components shown in Figure 11. The level of integration between the components may vary from one UE to another UE. Further, certain UEs may contain multiple instances of a component, such as multiple processors, memories, transceivers, transmitters, receivers, etc.

Processing circuitry 1102 is configured to process instructions and data and may be configured to implement any sequential state machine operative to execute instructions stored as machine-readable computer programs in memory 1110. Processing circuitry 1102 may be implemented as one or more hardware-implemented state machines (e.g., in discrete logic, fieldprogrammable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, processing circuitry 1102 may include multiple central processing units (CPUs).

In the example, input/output interface 1106 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into UE 1100. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, power source 1108 is structured as a battery or battery pack. Other types of power sources, such as an external power source (e.g., an electricity outlet), photovoltaic device, or power cell, may be used. Power source 1108 may further include power circuitry for delivering power from power source 1108 itself, and/or an external power source, to the various parts of UE 1100 via input circuitry or an interface such as an electrical power cable. Delivering power may be, for example, for charging power source 1108. Power circuitry may perform any formatting, converting, or other modification to the power from power source 1108 to make the power suitable for the respective components of UE 1100 to which power is supplied.

Memory 1110 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, memory 1110 includes one or more application programs 1114, such as an operating system, web browser application, a widget, gadget engine, or other application, and corresponding data 1116. Memory 1110 may store, for use by UE 1100, any of a variety of various operating systems or combinations of operating systems.

Memory 1110 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card." Memory 1110 may allow UE 1100 to access instructions, application programs and the like, stored on transitory or non-transitory memory media, to off-load data, or to upload data. An article of manufacture, such as one utilizing a communication system may be tangibly embodied as or in memory 1110, which may be or comprise a device-readable storage medium.

Processing circuitry 1102 may be configured to communicate with an access network or other network using communication interface 1112. Communication interface 1112 may comprise one or more communication subsystems and may include or be communicatively coupled to an antenna 1122. Communication interface 1112 may include one or more transceivers used to communicate, such as by communicating with one or more remote transceivers of another device capable of wireless communication (e.g., another UE or a network node in an access network). Each transceiver may include transmitter 1118 and/or a receiver 1120 appropriate to provide network communications (e.g., optical, electrical, frequency allocations, and so forth). Moreover, transmitter 1118 and receiver 1120 may be coupled to one or more antennas (e.g., 1122) and may share circuit components, software, or firmware, or alternatively be implemented separately.

In the illustrated embodiment, communication functions of communication interface 1112 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1112, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., an alert is sent when moisture is detected), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to UE 1100 shown in Figure 11.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 12 shows a network node 1200 in accordance with some embodiments. Examples of network nodes include, but are not limited to, access points (e.g., radio access points) and base stations (e.g., radio base stations, Node Bs, eNBs, and gNBs).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

Network node 1200 includes processing circuitry 1202, memory 1204, communication interface 1206, and power source 1208. Network node 1200 may be composed of multiple physically separate components (e.g., a NodeB component and a RNC component, or a BTS component and a BSC component, etc.), which may each have their own respective components. In certain scenarios in which network node 1200 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 1200 may be configured to support multiple radio access technologies (RATs). In such embodiments, some components may be duplicated (e.g., separate memory 1204 for different RATs) and some components may be reused (e.g., a same antenna 1210 may be shared by different RATs). Network node 1200 may also include multiple sets of the various illustrated components for different wireless technologies integrated into network node 1200, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1200.

Processing circuitry 1202 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1200 components, such as memory 1204, to provide network node 1200 functionality.

In some embodiments, processing circuitry 1202 includes a system on a chip (SOC). In some embodiments, processing circuitry 1202 includes one or more of radio frequency (RF) transceiver circuitry 1212 and baseband processing circuitry 1214. In some embodiments, RF transceiver circuitry 1212 and baseband processing circuitry 1214 may be on separate chips (or sets of chips), boards, or units, such as radio units and digital units. In alternative embodiments, some or all of RF transceiver circuitry 1212 and baseband processing circuitry 1214 may be on the same chip or set of chips, boards, or units.

Memory 1204 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by processing circuitry 1202. Memory 1204 may store any suitable instructions, data, or information, including a computer program, software, an application including one or more of logic, rules, code, tables, and/or other instructions (collectively denoted computer program 1204a, which may be in the form of a computer program product) capable of being executed by processing circuitry 1202 and utilized by network node 1200. Memory 1204 may be used to store any calculations made by processing circuitry 1202 and/or any data received via communication interface 1206. In some embodiments, processing circuitry 1202 and memory 1204 is integrated.

Communication interface 1206 is used in wired or wireless communication of signaling and/or data between a network node, access network, and/or UE. As illustrated, communication interface 1206 comprises port(s)/terminal(s) 1216 to send and receive data, for example to and from a network over a wired connection. Communication interface 1206 also includes radio front-end circuitry 1218 that may be coupled to, or in certain embodiments a part of, antenna 1210. Radio front-end circuitry 1218 comprises filters 1220 and amplifiers 1222. Radio front-end circuitry 1218 may be connected to antenna 1210 and processing circuitry 1202. The radio front-end circuitry may be configured to condition signals communicated between antenna 1210 and processing circuitry 1202. Radio front-end circuitry 1218 may receive digital data that is to be sent out to other network nodes or UEs via a wireless connection. Radio front-end circuitry 1218 may convert the digital data into a radio signal having the appropriate channel and bandwidth parameters using a combination of filters 1220 and/or amplifiers 1222. The radio signal may then be transmitted via antenna 1210. Similarly, when receiving data, antenna 1210 may collect radio signals which are then converted into digital data by radio front-end circuitry 1218. The digital data may be passed to processing circuitry 1202. In other embodiments, the communication interface may comprise different components and/or different combinations of components.

In certain alternative embodiments, network node 1200 does not include separate radio front-end circuitry 1218, instead, processing circuitry 1202 includes radio front-end circuitry and is connected to antenna 1210. Similarly, in some embodiments, some or all of RF transceiver circuitry 1212 is part of communication interface 1206. In still other embodiments, communication interface 1206 includes one or more ports or terminals 1216, radio front-end circuitry 1218, and RF transceiver circuitry 1212, as part of a radio unit (not shown), and communication interface 1206 communicates with baseband processing circuitry 1214, which is part of a digital unit (not shown).

Antenna 1210 may include one or more antennas, or antenna arrays, configured to send and/or receive wireless signals. Antenna 1210 may be coupled to radio front-end circuitry 1218 and may be any type of antenna capable of transmitting and receiving data and/or signals wirelessly. In certain embodiments, antenna 1210 is separate from network node 1200 and connectable to network node 1200 through an interface or port.

Antenna 1210, communication interface 1206, and/or processing circuitry 1202 may be configured to perform any receiving operations and/or certain obtaining operations described herein as being performed by the network node. Any information, data and/or signals may be received from a UE, another network node and/or any other network equipment. Similarly, antenna 1210, communication interface 1206, and/or processing circuitry 1202 may be configured to perform any transmitting operations described herein as being performed by the network node. Any information, data and/or signals may be transmitted to a UE, another network node and/or any other network equipment.

Power source 1208 provides power to the various components of network node 1200 in a form suitable for the respective components (e.g., at a voltage and current level needed for each respective component). Power source 1208 may further comprise, or be coupled to, power management circuitry to supply the components of network node 1200 with power for performing the functionality described herein. For example, network node 1200 may be connectable to an external power source (e.g., the power grid, an electricity outlet) via an input circuitry or interface such as an electrical cable, whereby the external power source supplies power to power circuitry of power source 1208. As a further example, power source 1208 may comprise a source of power in the form of a battery or battery pack which is connected to, or integrated in, power circuitry. The battery may provide backup power should the external power source fail.

Embodiments of network node 1200 may include additional components beyond those shown in Figure 12 for providing certain aspects of the network node's functionality, including any of the functionality described herein and/or any functionality necessary to support the subject matter described herein. For example, network node 1200 may include user interface equipment to allow input of information into network node 1200 and to allow output of information from network node 1200. This may allow a user to perform diagnostic, maintenance, repair, and other administrative functions for network node 1200.

In various embodiments, network node 1200 (and its constituent components) can be configured to perform operations comprising various methods described herein, such as methods performed by a data consumer network function (NFc), a data producer network function (NFp), and a data repository function (DRF, e.g., ADRF).

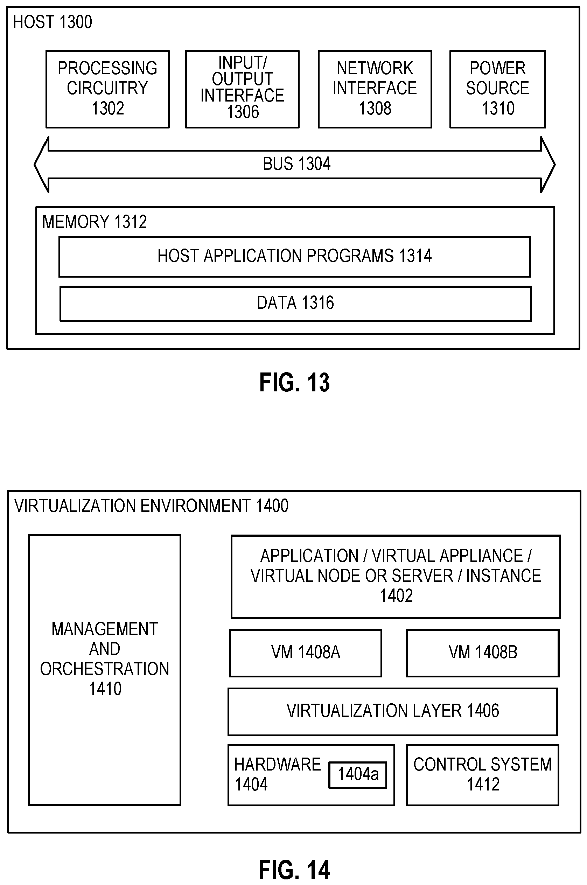

Figure 13 is a block diagram of a host 1300, which may be an embodiment of host 1016 of Figure 10, in accordance with various aspects described herein. As used herein, host 1300 may be or comprise various combinations hardware and/or software, including a standalone server, a blade server, a cloud-implemented server, a distributed server, a virtual machine, container, or processing resources in a server farm. Host 1300 may provide one or more services to one or more UEs.

Host 1300 includes processing circuitry 1302 that is operatively coupled via bus 1304 to input/output interface 1306, network interface 1308, power source 1310, and memory 1312. Other components may be included in other embodiments. Features of these components may be substantially similar to those described with respect to the devices of previous figures, such as Figures 11 and 12, such that the descriptions thereof are generally applicable to the corresponding components of host 1300.

Memory 1312 may include one or more computer programs including one or more host application programs 1314 and data 1316, which may include user data, e.g., data generated by a UE for host 1300 or data generated by host 1300 for a UE. Embodiments of host 1300 may utilize only a subset or all of the components shown. Host application programs 1314 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). Host application programs 1314 may also provide for user authentication and licensing checks and may periodically report health, routes, and content availability to a central node, such as a device in or on the edge of a core network. Accordingly, host 1300 may select and/or indicate a different host for over-the-top services for a UE. Host application programs 1314 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 14 is a block diagram illustrating a virtualization environment 1400 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1400 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1402 (which may alternatively be called software instances, virtual appliances, network functions, virtual nodes, virtual network functions, etc.) are run in the virtualization environment 1400 to implement some of the features, functions, and/or benefits of some of the embodiments disclosed herein. For example, in various embodiments, various data consumer NFs (NFc), data product NFs (NFp), and data repository functions (DRF) described herein can be instantiated as virtual NFs in environment 1400, such that each instantiation performs operations corresponding to methods (or procedures) described elsewhere herein.

Hardware 1404 includes processing circuitry, memory that stores software and/or instructions (collectively denoted computer program 1404a, which may be in the form of a computer program product) executable by hardware processing circuitry, and/or other hardware devices as described herein, such as a network interface, input/output interface, and so forth. Software may be executed by the processing circuitry to instantiate one or more virtualization layers 1406 (also referred to as hypervisors or virtual machine monitors (VMMs)), provide VMs 1408a-b (one or more of which may be generally referred to as VMs 1408), and/or perform any of the functions, features and/or benefits described in relation with some embodiments described herein. The virtualization layer 1406 may present a virtual operating platform that appears like networking hardware to the VMs 1408.

VMs 1408 comprise virtual processing, virtual memory, virtual networking or interface and virtual storage, and may be run by a corresponding virtualization layer 1406. Different embodiments of the instance of virtual appliance 1402 may be implemented on one or more of VMs 1408, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, each VM 1408 may be a software implementation of a physical machine that runs programs as if they were executing on a physical, non-virtualized machine. Each VM 1408, and that part of hardware 1404 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1408 on top of hardware 1404 and corresponds to application 1402.

Hardware 1404 may be implemented in a standalone network node with generic or specific components. Hardware 1404 may implement some functions via virtualization. Alternatively, hardware 1404 may be part of a larger cluster of hardware (e.g., such as in a data center or CPE) where many hardware nodes work together and are managed via management and orchestration 1410, which, among others, oversees lifecycle management of applications 1402. In some embodiments, hardware 1404 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1412 which may alternatively be used for communication between hardware nodes and radio units.

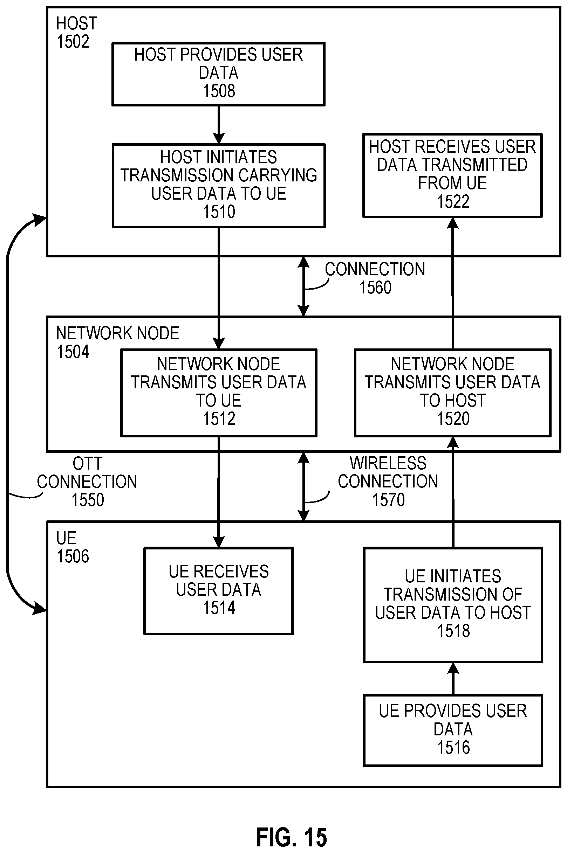

Figure 15 shows a communication diagram of a host 1502 communicating via a network node 1504 with a UE 1506 over a partially wireless connection in accordance with some embodiments. Example implementations, in accordance with various embodiments, of the UE (such as a UE 1012a of Figure 10 and/or UE 1100 of Figure 11), network node (such as network node 1010a of Figure 10 and/or network node 1200 of Figure 12), and host (such as host 1016 of Figure 10 and/or host 1300 of Figure 13) discussed in the preceding paragraphs will now be described with reference to Figure 15.

Like host 1300, embodiments of host 1502 include hardware, such as a communication interface, processing circuitry, and memory. Host 1502 also includes software, which is stored in or accessible by host 1502 and executable by the processing circuitry. The software includes a host application that may be operable to provide a service to a remote user, such as UE 1506 connecting via an over-the-top (OTT) connection 1550 extending between UE 1506 and host 1502. In providing the service to the remote user, a host application may provide user data which is transmitted using OTT connection 1550.

Network node 1504 includes hardware enabling it to communicate with host 1502 and UE 1506. Connection 1560 may be direct or pass through a core network (like core network 1006 of Figure 10) and/or one or more other intermediate networks, such as one or more public, private, or hosted networks. For example, an intermediate network may be a backbone network or the Internet.

UE 1506 includes hardware and software, which is stored in or accessible by UE 1506 and executable by the UE's processing circuitry. The software includes a client application, such as a web browser or operator-specific "app" that may be operable to provide a service to a human or non-human user via UE 1506 with the support of host 1502. In host 1502, an executing host application may communicate with the executing client application via OTT connection 1550 terminating at UE 1506 and host 1502. In providing the service to the user, the UE's client application may receive request data from the host's host application and provide user data in response to the request data. OTT connection 1550 may transfer both the request data and the user data. The UE's client application may interact with the user to generate the user data that it provides to the host application through OTT connection 1550.

OTT connection 1550 may extend via a connection 1560 between host 1502 and network node 1504 and via a wireless connection 1570 between network node 1504 and UE 1506 to provide the connection between host 1502 and UE 1506. Connection 1560 and wireless connection 1570, over which OTT connection 1550 may be provided, have been drawn abstractly to illustrate the communication between host 1502 and UE 1506 via network node 1504, without explicit reference to any intermediary devices and the precise routing of messages via these devices.

As an example of transmitting data via OTT connection 1550, in step 1508, host 1502 provides user data, which may be performed by executing a host application. In some embodiments, the user data is associated with a particular human user interacting with UE 1506. In other embodiments, the user data is associated with a UE 1506 that shares data with host 1502 without explicit human interaction. In step 1510, host 1502 initiates a transmission carrying the user data towards UE 1506. Host 1502 may initiate the transmission responsive to a request transmitted by UE 1506. The request may be caused by human interaction with UE 1506 or by operation of the client application executing on UE 1506. The transmission may pass via network node 1504, in accordance with the teachings of the embodiments described throughout this disclosure. Accordingly, in step 1512, network node 1504 transmits to UE 1506 the user data that was carried in the transmission that host 1502 initiated, in accordance with the teachings of the embodiments described throughout this disclosure. In step 1514, UE 1506 receives the user data carried in the transmission, which may be performed by a client application executed on UE 1506 associated with the host application executed by host 1502.

In some examples, UE 1506 executes a client application which provides user data to host 1502. The user data may be provided in reaction or response to the data received from host 1502. Accordingly, in step 1516, UE 1506 may provide user data, which may be performed by executing the client application. In providing the user data, the client application may further consider user input received from the user via an input/output interface of UE 1506. Regardless of how the user data was provided, UE 1506 initiates, in step 1518, transmission of the user data towards host 1502 via network node 1504. In step 1520, in accordance with the teachings of the embodiments described throughout this disclosure, network node 1504 receives user data from UE 1506 and initiates transmission of the received user data towards host 1502. In step 1522, host 1502 receives the user data carried in the transmission initiated by UE 1506.

One or more of the various embodiments improve the performance of OTT services provided to UE 1506 using OTT connection 1550, in which wireless connection 1570 forms the last segment. More precisely, embodiments can enable an ADRF (or other data repository) to easily verify whether a data consumer network function (NFc) is authorized to access and receive analytics data and/or models that have been collected from a data producer network function (e.g., NWDAF) and stored in ADRF. This prevents ADRF from distributing proprietary and/or sensitive data to an unauthorized and/or "rogue" prospective NFc. Thus, embodiments can improve security of analytics and/or models used in 5G networks. Improved network security can increase the value of OTT services delivered via the network to both service providers and end users.

In an example scenario, factory status information may be collected and analyzed by host 1502. As another example, host 1502 may process audio and video data which may have been retrieved from a UE for use in creating maps. As another example, host 1502 may collect and analyze real-time data to assist in controlling vehicle congestion (e.g., controlling traffic lights). As another example, host 1502 may store surveillance video uploaded by a UE. As another example, host 1502 may store or control access to media content such as video, audio, VR or AR which it can broadcast, multicast or unicast to UEs. As other examples, host 1502 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency, and other factors on which the one or more embodiments improve. There may further be an optional network functionality for reconfiguring OTT connection 1550 between host 1502 and UE 1506, in response to variations in the measurement results. The measurement procedure and/or the network functionality for reconfiguring the OTT connection may be implemented in software and hardware of host 1502 and/or UE 1506. In some embodiments, sensors (not shown) may be deployed in or in association with other devices through which OTT connection 1550 passes; the sensors may participate in the measurement procedure by supplying values of the monitored quantities exemplified above, or supplying values of other physical quantities from which software may compute or estimate the monitored quantities. Reconfiguring OTT connection 1550 may include message format, retransmission settings, preferred routing etc.; the reconfiguring need not directly alter the operation of network node 1504. Such procedures and functionalities may be known and practiced in the art. In certain embodiments, measurements may involve proprietary UE signaling that facilitates measurements of throughput, propagation times, latency, and the like, by host 1502. The measurements may be implemented in that software causes messages to be transmitted, in particular empty or "dummy" messages, using OTT connection 1550 while monitoring propagation times, errors, etc.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (*e.g*., "data" and "information"). It should be understood, that although these terms (and/or other terms that can be synonymous to one another) can be used synonymously herein, there can be instances when such words can be intended to not be used synonymously.

## Claims

1. A method performed by a data consumer network function, NFc (510, 610, 1008, 1200, 1402) of a communication network (198, 200, 1002), the method comprising:
sending (710), to a data producer network function, NFp (530, 630, 1008, 1200, 1402) of the communication network, a first request for first data produced by the NFp and stored in a data repository function, DRF (520, 620, 1008, 1200, 1402) of the communication network;
receiving (720), from the NFp, a response that includes an indication that the NFc is authorized to access the first data stored in the DRF;
sending (730), to the DRF, a second request for the first data, wherein the second request includes the indication that the NFc is authorized to access the first data stored in the DRF; and
receiving (740) the first data from the DRF in response to the second request.

2. The method of claim 1, wherein the response from the NFp also includes information identifying the DRF.

3. The method of claim 2, wherein the information identifying the DRF comprises an identity of the DRF or an address of the DRF.

4. The method of any of claims 1-3, wherein the indication that the NFc is authorized to access the first data stored in the DRF is one of the following: an access token, or a string signed with a digital signature of the NFp.

5. The method of claim 4, wherein the access token or the signed string includes metadata related to one or more of the following: the first data, the NFc, the NFp, and the DRF.

6. The method of claim 5, wherein:
the metadata related to the first data includes one or more of the following: one or more identifiers of the first data, and one or more specifications of the first data;
the metadata related to the NFc includes one of more of the following: a type of the NFc, and an instance identifier of the NFc;
the metadata related to the NFp includes one of more of the following: a type of the NFp, and an instance identifier of the NFp; and
the metadata related to the DRF includes one or more of the following: a service operation for accessing the first data, a time window for accessing the first data, and a storage transaction identifier associated with the first data.

7. The method of any of claims 1-3, wherein:
the indication that the NFc is authorized to access the first data stored in the DRF is a random string; and
the second request also includes metadata related to the first data and metadata related to the NFc.

8. A method performed by a data producer network function, NFp (530, 630, 1008, 1200, 1402) of a communication network (198, 200, 1002), the method comprising:
storing (810), in a data repository function, DRF (520, 620, 1008, 1200, 1402) of the communication network, first data together with metadata related to one or more of the following: the first data, the NFp, the DRF, and a data consumer network function, NFc (510, 610, 1008, 1200, 1402) of the communication network;
receiving (820), from the NFc, a first request for the first data stored in the DRF; and
sending (830), to the NFc, a first response that includes an indication that the NFc is authorized to access the first data stored in the DRF.

9. The method of claim 8, wherein the first response to the NFc also includes information identifying the DRF.

10. The method of claim 9, wherein the information identifying the DRF comprises an identity of the DRF or an address of the DRF.

11. The method of any of claims 8-10, wherein:
the metadata related to the first data includes one or more of the following: one or more identifiers of the first data, and one or more specifications of the first data;
the metadata related to the NFc includes one of more of the following: a type of the NFc, and an instance identifier of the NFc;
the metadata related to the NFp includes one of more of the following: a type of the NFp, and an instance identifier of the NFp; and
the metadata related to the DRF includes one or more of the following: a service operation for accessing the first data, a time window for accessing the first data, and a storage transaction identifier associated with the first data.

12. The method of any of claims 8-11, wherein the indication that the NFc is authorized to access the first data stored in the DRF is one of the following: an access token, or a string signed with a digital signature of the NFp.

13. The method of claims 8-11, wherein the indication that the NFc is authorized to access the first data stored in the DRF is a random string, and the method further comprises:
receiving (840) from the DRF a second request that includes a random string, metadata related to the first data, and metadata related to the NFc; and
sending (860) to the DRF a second response indicating that the NFc is authorized to access the first data, based on detecting (850) the following matches:
between the random strings in the first response and in the second request; and
between the metadata stored with the first data and the metadata in the second request.

14. A method performed by a data repository function, DRF (520, 620, 1008, 1200, 1402) of a communication network (198, 200, 1002), the method comprising:
storing (910) first data produced by a data producer network function, NFp (530, 630, 1008, 1200, 1402) of the communication network, wherein the first data is stored together with metadata related to one or more of the following: the first data, the NFp, the DRF, and a data consumer network function, NFc (510, 610, 1008, 1200, 1402) of the communication network;
receiving (920) from the NFc a request for the first data, wherein the request includes an indication that the NFc is authorized to access the first data; and
based on verifying (930) that the NFc is authorized to access the first data, sending (940) the first data to the NFc.

15. The method of claim 14, wherein:
the metadata related to the first data includes one or more of the following: one or more identifiers of the first data, and one or more specifications of the first data;
the metadata related to the NFc includes one of more of the following: a type of the NFc, and an instance identifier of the NFc;
the metadata related to the NFp includes one of more of the following: a type of the NFp, and an instance identifier of the NFp; and
the metadata related to the DRF includes one or more of the following: a service operation for accessing the first data, a time window for accessing the first data, and a storage transaction identifier associated with the first data.

16. The method of any of claims 14-15, wherein:
the indication that the NFc is authorized to access the first data is an access token that includes metadata related to one or more of the following: the first data, the NFp, the DRF, and the NFc; and
verifying (930) that the NFc is authorized to access the first data comprises detecting (931) a match between claims of the access token and the metadata stored with the first data.

17. The method of any of claims 14-15, wherein:
the indication that the NFc is authorized to access the first data is a string that includes metadata related to one or more of the following: the first data, the NFp, the DRF, and the NFc;
the string is signed by a digital signature; and
verifying (930) that the NFc is authorized to access the first data comprises detecting (932) the following matches:
between the digital signature of the string and a digital signature associated with the NFp, and
between the metadata in the string and the metadata stored with the first data.

18. The method of any of claims 14-15, wherein the indication that the NFc is authorized to access the first data is a random string, and verifying (930) that the NFc is authorized to access the first data comprises:
sending (933), to the NFp, a second request that includes the random string, metadata related to the first data, and metadata related to the NFc; and
receiving (934), from the NFp, a second response indicating that the NFc is authorized to access the first data.

19. The method of any of claims 1-18, wherein the first data includes one or more of the following: analytics data, and one or more artificial intelligence/machine learning, AI/ML, models.

20. A data consumer network function, NFc (510, 610, 1008, 1200, 1402) configured to operate in a communication network (198, 200, 1002), the NFc being further configured to:
send (710), to a data producer network function, NFp (530, 630, 1008, 1200, 1402) of the communication network, a first request for first data produced by the NFp and stored in a data repository function, DRF (520, 620, 1008, 1200, 1402) of the communication network;
receive (720), from the NFp, a response that includes an indication that the NFc is authorized to access the first data stored in the DRF;
send (730), to the DRF, a second request for the first data, wherein the second request includes the indication that the NFc is authorized to access the first data stored in the DRF; and
receive (750) the first data from the DRF in response to the second request.

21. A data producer network function, NFp (530, 630, 1008, 1200, 1402) configured to operate in a communication network (198, 200, 1002), the NFp being further configured to:
store (810), in a data repository function, DRF (520, 620, 1008, 1200, 1402) of the communication network, first data together with metadata related to one or more of the following: the first data, the NFp, the DRF, and a data consumer network function, NFc (510, 610, 1008, 1200, 1402) of the communication network;
receiving (820), from the NFc, a first request for the first data stored in the DRF; and
sending (830), to the NFc, a first response that includes an indication that the NFc is authorized to access the first data stored in the DRF.

22. A data repository function, DRF (520, 620, 1008, 1200, 1402) configured to operate in a communication network (198, 200, 1002), the DRF being further configured to:
store (910) first data produced by a data producer network function, NFp (530, 630, 1008, 1200, 1402) of the communication network, wherein the first data is stored together with metadata related to one or more of the following: the first data, the NFp, the DRF, and a data consumer network function, NFc (510, 610, 1008, 1200, 1402) of the communication network;
receive (920) from the NFc a request for the first data, wherein the request includes an indication that the NFc is authorized to access the first data; and
based on verifying (930) that the NFc is authorized to access the first data, send (940) the first data to the NFc.

## Patentansprüche

1. Verfahren, das durch eine Datenkonsumentennetzwerkfunktion, NFc (510, 610, 1008, 1200, 1402), eines Kommunikationsnetzwerks (198, 200, 1002) durchgeführt wird, wobei das Verfahren Folgendes umfasst:
Senden (710), an eine Datenerzeugernetzwerkfunktion, NFp (530, 630, 1008, 1200, 1402), des Kommunikationsnetzwerks, einer ersten Anfrage für erste Daten, die durch die NFp erzeugt und in einer Datenrepositoryfunktion, DRF (520, 620, 1008, 1200, 1402), des Kommunikationsnetzwerks gespeichert werden;
Empfangen (720), von der NFp, einer Antwort, die eine Angabe beinhaltet, dass die NFc dazu autorisiert ist, auf die in der DRF gespeicherten ersten Daten zuzugreifen; und
Senden (730), an die DRF, einer zweiten Anfrage für die ersten Daten, wobei die zweite Anfrage die Angabe beinhaltet, dass die NFc dazu autorisiert ist, auf die in der DRF gespeicherten ersten Daten zuzugreifen; und
Empfangen (740) der ersten Daten von der DRF als Reaktion auf die zweite Anfrage.

2. Verfahren nach Anspruch 1, wobei die Antwort von der NFp zudem Informationen beinhaltet, welche die DRF identifizieren.

3. Verfahren nach Anspruch 2, wobei die Informationen, welche die DRF identifizieren, eine Identität der DRF oder eine Adresse der DRF umfassen.

4. Verfahren nach einem der Ansprüche 1-3, wobei die Angabe, dass die NFc dazu autorisiert ist, auf die in der DRF gespeicherten ersten Daten zuzugreifen, eines der Folgenden ist: ein Zugriffstoken oder eine Zeichenfolge, die mit einer digitalen Signatur der NFp signiert ist.

5. Verfahren nach Anspruch 4, wobei der Zugriffstoken oder die signierte Zeichenfolge Metadaten in Bezug auf eines oder mehrere der Folgenden beinhaltet/beinhalten: die ersten Daten, die NFc, die NFp und die DRF.

6. Verfahren nach Anspruch 5, wobei:
die Metadaten in Bezug auf die ersten Daten eines oder mehrere der Folgenden beinhalten: eine oder mehrere Kennungen der ersten Daten und eine oder mehrere Spezifikationen der ersten Daten;
die Metadaten in Bezug auf die NFc eines oder mehrere der Folgenden beinhalten: einen Typ der NFc und eine Instanzkennung der NFc;
die Metadaten in Bezug auf die NFp eines oder mehrere der Folgenden beinhalten: einen Typ der NFp und eine Instanzkennung der NFp; und
die Metadaten in Bezug auf die DRF eines oder mehrere der Folgenden beinhalten: einen Dienstvorgang zum Zugreifen auf die ersten Daten, ein Zeitfenster zum Zugreifen auf die ersten Daten und eine Speichertransaktionskennung, die den ersten Daten zugeordnet ist.

7. Verfahren nach einem der Ansprüche 1-3, wobei:
die Angabe, dass die NFc dazu autorisiert ist, auf die in der DRF gespeicherten ersten Daten zuzugreifen, eine zufällige Zeichenfolge ist; und
die zweite Anfrage zudem Metadaten in Bezug auf die ersten Daten und Metadaten in Bezug auf die NFc beinhaltet.

8. Verfahren, das durch eine Datenerzeugernetzwerkfunktion, NFp (530, 630, 1008, 1200, 1402), eines Kommunikationsnetzwerks (198, 200, 1002) durchgeführt wird, wobei das Verfahren Folgendes umfasst:
Speichern (810), in einer Datenrepositoryfunktion, DRF (520, 620, 1008, 1200, 1402), des Kommunikationsnetzwerks, von ersten Daten zusammen mit Metadaten in Bezug auf eines oder mehrere der Folgenden: die ersten Daten, die NFp, die DRF und eine Datenkonsumentennetzwerkfunktion, NFc (510, 610, 1008, 1200, 1402), des Kommunikationsnetzwerks;
Empfangen (820), von der NFc, einer ersten Anfrage für die in der DRF gespeicherten ersten Daten; und
Senden (830), an die NFc, einer ersten Antwort, die eine Angabe beinhaltet, dass die NFc dazu autorisiert ist, auf die in der DRF gespeicherten ersten Daten zuzugreifen.

9. Verfahren nach Anspruch 8, wobei die erste Antwort an die NFc zudem Informationen beinhaltet, welche die DRF identifizieren.

10. Verfahren nach Anspruch 9, wobei die Informationen, welche die DRF identifizieren, eine Identität der DRF oder eine Adresse der DRF umfassen.

11. Verfahren nach einem der Ansprüche 8-10, wobei:
die Metadaten in Bezug auf die ersten Daten eines oder mehrere der Folgenden beinhalten: eine oder mehrere Kennungen der ersten Daten und eine oder mehrere Spezifikationen der ersten Daten;
die Metadaten in Bezug auf die NFc eines oder mehrere der Folgenden beinhalten: einen Typ der NFc und eine Instanzkennung der NFc;
die Metadaten in Bezug auf die NFp eines oder mehrere der Folgenden beinhalten: einen Typ der NFp und eine Instanzkennung der NFp; und
die Metadaten in Bezug auf die DRF eines oder mehrere der Folgenden beinhalten: einen Dienstvorgang zum Zugreifen auf die ersten Daten, ein Zeitfenster zum Zugreifen auf die ersten Daten und eine Speichertransaktionskennung, die den ersten Daten zugeordnet ist.

12. Verfahren nach einem der Ansprüche 8-11, wobei die Angabe, dass die NFc dazu autorisiert ist, auf die in der DRF gespeicherten ersten Daten zuzugreifen, eines der Folgenden ist: ein Zugriffstoken oder eine Zeichenfolge, die mit einer digitalen Signatur der NFp signiert ist.

13. Verfahren nach Anspruch 8-11, wobei die Angabe, dass die NFc dazu autorisiert ist, auf die in der DRF gespeicherten ersten Daten zuzugreifen, eine zufällige Zeichenfolge ist und das Verfahren ferner Folgendes umfasst:
Empfangen (840), von der DRF, einer zweiten Anfrage, die eine zufällige Zeichenfolge, Metadaten in Bezug auf die ersten Daten und Metadaten in Bezug auf die NFc beinhaltet; und
Senden (860), an die DRF, einer zweiten Antwort, die angibt, dass die NFc dazu autorisiert ist, auf die ersten Daten zuzugreifen, basierend auf Detektieren (850) der folgenden Übereinstimmungen:
zwischen den zufälligen Zeichenfolgen in der ersten Antwort und in der zweiten Anfrage; und
zwischen den mit den ersten Daten gespeicherten Metadaten und den in der zweiten Anfrage gespeicherten Metadaten.

14. Verfahren, das durch eine Datenrepositoryfunktion, DRF (520, 620, 1008, 1200, 1402), eines Kommunikationsnetzwerks (198, 200, 1002) durchgeführt wird, wobei das Verfahren Folgendes umfasst:
Speichern (910) von ersten Daten, die durch eine Datenerzeugernetzwerkfunktion, NFp (530, 630, 1008, 1200, 1402), des Kommunikationsnetzwerks erzeugt werden, wobei die ersten Daten zusammen mit Metadaten in Bezug auf eines oder mehrere der Folgenden gespeichert werden: die ersten Daten, die NFp, die DRF und eine Datenkonsumentennetzwerkfunktion, NFc (510, 610, 1008, 1200, 1402), des Kommunikationsnetzwerks;
Empfangen (920), von der NFc, einer Anfrage für die ersten Daten, wobei die Anfrage eine Angabe beinhaltet, dass die NFc dazu autorisiert ist, auf die ersten Daten zuzugreifen; und
basierend auf Verifizieren (930), dass die NFc dazu autorisiert ist, auf die ersten Daten zuzugreifen, Senden (940) der ersten Daten an die NFc.

15. Verfahren nach Anspruch 14, wobei:
die Metadaten in Bezug auf die ersten Daten eines oder mehrere der Folgenden beinhalten: eine oder mehrere Kennungen der ersten Daten und eine oder mehrere Spezifikationen der ersten Daten;
die Metadaten in Bezug auf die NFc eines oder mehrere der Folgenden beinhalten: einen Typ der NFc und eine Instanzkennung der NFc;
die Metadaten in Bezug auf die NFp eines oder mehrere der Folgenden beinhalten: einen Typ der NFp und eine Instanzkennung der NFp; und
die Metadaten in Bezug auf die DRF eines oder mehrere der Folgenden beinhalten: einen Dienstvorgang zum Zugreifen auf die ersten Daten, ein Zeitfenster zum Zugreifen auf die ersten Daten und eine Speichertransaktionskennung, die den ersten Daten zugeordnet ist.

16. Verfahren nach einem der Ansprüche 14-15, wobei:
die Angabe, dass die NFc dazu autorisiert ist, auf die ersten Daten zuzugreifen, ein Zugriffstoken ist, der Metadaten in Bezug auf eines oder mehrere der Folgenden beinhaltet: die ersten Daten, die NFp, die DRF und die NFc; und
das Verifizieren (930), dass die NFc dazu autorisiert ist, auf die ersten Daten zuzugreifen, Detektieren (931) einer Übereinstimmung zwischen Ansprüchen des Zugriffstokens und den mit den ersten Daten gespeicherten Metadaten umfasst.

17. Verfahren nach einem der Ansprüche 14-15, wobei:
die Angabe, dass die NFc dazu autorisiert ist, auf die ersten Daten zuzugreifen, eine Zeichenfolge ist, die Metadaten in Bezug auf eines oder mehrere der Folgenden beinhaltet: die ersten Daten, die NFp, die DRF und die NFc;
die Zeichenfolge durch eine digitale Signatur signiert ist; und
das Verifizieren (930), dass die NFc dazu autorisiert ist, auf die ersten Daten zuzugreifen, Detektieren (932) der folgenden Übereinstimmungen umfasst:
zwischen der digitalen Signatur der Zeichenfolge und der digitalen Signatur, die der NFp zugeordnet ist, und zwischen den Metadaten in der Zeichenfolge und den mit den ersten Daten gespeicherten Metadaten.

18. Verfahren nach einem der Ansprüche 14-15, wobei die Angabe, dass die NFc dazu autorisiert ist, auf die ersten Daten zuzugreifen, eine zufällige Zeichenfolge ist, und das Verifizieren (930), dass die NFc dazu autorisiert ist, auf die ersten Daten zuzugreifen, Folgendes umfasst:
Senden (933), an die NFp, einer zweiten Anfrage, welche die zufällige Zeichenfolge, Metadaten in Bezug auf die ersten Daten und Metadaten in Bezug auf die NFc beinhaltet; und
Empfangen (934), von der NFp, einer zweiten Antwort, die angibt, dass die NFc dazu autorisiert ist, auf die ersten Daten zuzugreifen.

19. Verfahren nach einem der Ansprüche 1-18, wobei die ersten Daten eines oder mehrere der Folgenden beinhalten: Analysedaten und ein oder mehrere Modelle künstlicher Intelligenz/maschinellen Lernens, KI/ML.

20. Datenkonsumentennetzwerkfunktion, NFc (510, 610, 1008, 1200, 1402), die dazu konfiguriert ist, in einem Kommunikationsnetzwerk (198, 200, 1002) betrieben zu werden, wobei die NFc ferner zu Folgendem konfiguriert ist:
Senden (710), an eine Datenerzeugernetzwerkfunktion, NFp (530, 630, 1008, 1200, 1402), des Kommunikationsnetzwerks einer ersten Anfrage für erste Daten, die durch die NFp erzeugt und in einer Datenrepositoryfunktion, DRF (520, 620, 1008, 1200, 1402), des Kommunikationsnetzwerks gespeichert werden;
Empfangen (720), von der NFp, einer Antwort, die eine Angabe beinhaltet, dass die NFc dazu autorisiert ist, auf die in der DRF gespeicherten ersten Daten zuzugreifen;
Senden (730), an die DRF, einer zweiten Anfrage für die ersten Daten, wobei die zweite Anfrage die Angabe beinhaltet, dass die NFc dazu autorisiert ist, auf die in der DRF gespeicherten ersten Daten zuzugreifen; und
Empfangen (750) der ersten Daten von der DRF als Reaktion auf die zweite Anfrage.

21. Datenerzeugernetzwerkfunktion, NFp (530, 630, 1008, 1200, 1402), die dazu konfiguriert ist, in einem Kommunikationsnetzwerk (198, 200, 1002) betrieben zu werden, wobei die NFp ferner zu Folgendem konfiguriert ist:
Speichern (810), in einer Datenrepositoryfunktion, DRF (520, 620, 1008, 1200, 1402), des Kommunikationsnetzwerks, von ersten Daten zusammen mit Metadaten in Bezug auf eines oder mehrere der Folgenden: die ersten Daten, die NFp, die DRF und eine Datenkonsumentennetzwerkfunktion, NFc (510, 610, 1008, 1200, 1402), des Kommunikationsnetzwerks;
Empfangen (820), von der NFc, einer ersten Anfrage für die in der DRF gespeicherten ersten Daten; und
Senden (830), an die NFc, einer ersten Antwort, die eine Angabe beinhaltet, dass die NFc dazu autorisiert ist, auf die in der DRF gespeicherten ersten Daten zuzugreifen.

22. Datenrepositoryfunktion, DRF (520, 620, 1008, 1200, 1402), die dazu konfiguriert ist, in einem Kommunikationsnetzwerk (198, 200, 1002) betrieben zu werden, wobei die DRF ferner zu Folgendem konfiguriert ist:
Speichern (910) von ersten Daten, die durch eine Datenerzeugernetzwerkfunktion, NFp (530, 630, 1008, 1200, 1402), des Kommunikationsnetzwerks erzeugt werden, wobei die ersten Daten zusammen mit Metadaten in Bezug auf eines oder mehrere der Folgenden gespeichert werden: die ersten Daten, die NFp, die DRF und eine Datenkonsumentennetzwerkfunktion, NFc (510, 610, 1008, 1200, 1402), des Kommunikationsnetzwerks;
Empfangen (920), von der NFc, einer Anfrage für die ersten Daten, wobei die Anfrage eine Angabe beinhaltet, dass die NFc dazu autorisiert ist, auf die ersten Daten zuzugreifen; und
basierend auf Verifizieren (930), dass die NFc dazu autorisiert ist, auf die ersten Daten zuzugreifen, Senden (940) der ersten Daten an die NFc.

## Revendications

1. Procédé réalisé par une fonction réseau consommatrice de données, NFc (510, 610, 1008, 1200, 1402) d'un réseau de communication (198, 200, 1002), le procédé comprenant :
l'envoi (710), à une fonction réseau productrice de données, NFp (530, 630, 1008, 1200, 1402) du réseau de communication, d'une première demande de premières données produites par la NFp et stockées dans une fonction de référentiel de données, DRF (520, 620, 1008, 1200, 1402) du réseau de communication ;
la réception (720), à partir de la NFp, d'une réponse qui comprend une indication que la NFc est autorisée à accéder aux premières données stockées dans la DRF ;
l'envoi (730), à la DRF, d'une deuxième demande pour les premières données, la deuxième demande incluant l'indication que la NFC est autorisée à accéder aux premières données stockées dans la DRF ; et
la réception (740) des premières données à partir de la DRF en réponse à la deuxième demande.

2. Procédé selon la revendication 1, dans lequel la réponse de la NFp comprend également des informations identifiant la DRF.

3. Procédé selon la revendication 2, dans lequel les informations identifiant la DRF comprennent une identité de la DRF ou une adresse de la DRF.

4. Procédé selon l'une quelconque des revendications 1 à 3, dans lequel l'indication selon laquelle la NFc est autorisée à accéder aux premières données stockées dans la DRF est l'un des suivant : un jeton d'accès ou une chaîne signée avec une signature numérique de la NFp.

5. Procédé selon la revendication 4, dans lequel le jeton d'accès ou la chaîne signée comprend des métadonnées liées à un ou plusieurs des éléments suivants : les premières données, la NFc, la NFp et la DRF.

6. Procédé selon la revendication 5, dans lequel :
les métadonnées liées aux premières données comprennent un ou plusieurs des éléments suivants : un ou plusieurs identifiants des premières données, et une ou plusieurs spécifications des premières données ;
les métadonnées liées à la NFc comprennent un ou plusieurs des éléments suivants : un type de la NFc et un identifiant d'instance de la NFc ;
les métadonnées liées à la NFp comprennent un ou plusieurs des éléments suivants : un type de la NFp et un identifiant d'instance de la NFp ; et
les métadonnées liées à la DRF comprennent un ou plusieurs des éléments suivants : une opération de service pour accéder aux premières données, une fenêtre temporelle pour accéder aux premières données et un identifiant de transaction de stockage associé aux premières données.

7. Procédé selon l'une quelconque des revendications 1 à 3, dans lequel :
l'indication que la NFC est autorisée à accéder aux premières données stockées dans la DRF est une chaîne aléatoire ; et
la deuxième demande comprend également des métadonnées liées aux premières données et des métadonnées liées à la NFC.

8. Procédé réalisé par une fonction réseau productrice de données, NFp (530, 630, 1008, 1200, 1402) d'un réseau de communication (198, 200, 1002), le procédé comprenant :
le stockage (810), dans une fonction de référentiel de données, DRF (520, 620, 1008, 1200, 1402) du réseau de communication, de premières données ainsi que de métadonnées relatives à un ou plusieurs des éléments suivants : les premières données, la NFp, la DRF, et une fonction de réseau consommatrice de données, NFc (510, 610, 1008, 1200, 1402) du réseau de communication ;
la réception (820), à partir de la NFc, d'une première demande pour les premières données stockées dans la DRF ; et
l'envoi (830), à la NFc, d'une première réponse qui comprend une indication que la NFc est autorisée à accéder aux premières données stockées dans la DRF.

9. Procédé selon la revendication 8, dans lequel la première réponse à la NFc comprend également des informations identifiant la DRF.

10. Procédé selon la revendication 9, dans lequel les informations identifiant la DRF comprennent une identité de la DRF ou une adresse de la DRF.

11. Procédé selon l'une quelconque des revendications 8 à 10, dans lequel :
les métadonnées liées aux premières données comprennent un ou plusieurs des éléments suivants : un ou plusieurs identifiants des premières données, et une ou plusieurs spécifications des premières données ;
les métadonnées liées à la NFc comprennent un ou plusieurs des éléments suivants : un type de la NFc et un identifiant d'instance de la NFc ;
les métadonnées liées à la NFp comprennent un ou plusieurs des éléments suivants : un type de la NFp et un identifiant d'instance de la NFp ; et
les métadonnées liées à la DRF comprennent un ou plusieurs des éléments suivants : une opération de service pour accéder aux premières données, une fenêtre temporelle pour accéder aux premières données et un identifiant de transaction de stockage associé aux premières données.

12. Procédé selon l'une quelconque des revendications 8 à 11, dans lequel l'indication selon laquelle la NFc est autorisée à accéder aux premières données stockées dans la DRF est l'un des suivantes : un jeton d'accès ou une chaîne signée avec une signature numérique de la NFp.

13. Procédé selon les revendications 8 à 11, dans lequel l'indication selon laquelle la NFC est autorisée à accéder aux premières données stockées dans la DRF est une chaîne aléatoire, et le procédé comprend en outre :
la réception (840) à partir de la DRF d'une deuxième demande qui comprend une chaîne aléatoire, de métadonnées liées aux premières données et de métadonnées liées à la NFC ; et
l'envoi (860) à la DRF d'une deuxième réponse indiquant que la NFC est autorisée à accéder aux premières données, sur la base de la détection (850) des correspondances suivantes :
entre les chaînes aléatoires dans la première réponse et dans la deuxième demande ; et
entre les métadonnées stockées avec les premières données et les métadonnées de la deuxième demande.

14. Procédé réalisé par une fonction de référentiel de données, DRF (520, 620, 1008, 1200, 1402) d'un réseau de communication (198, 200, 1002), le procédé comprenant :
le stockage (910) de premières données produites par une fonction réseau productrice de données, NFp (530, 630, 1008, 1200, 1402) du réseau de communication, les premières données étant stockées avec des métadonnées liées à un ou plusieurs des éléments suivants : les premières données, la NFp, la DRF et une fonction réseau consommatrice de données, NFc (510, 610, 1008, 1200, 1402) du réseau de communication ;
la réception (920) à partir de la NFC d'une demande pour les premières données, la demande comprenant une indication que la NFC est autorisée à accéder aux premières données ; et
sur la base de la vérification (930) que la NFC est autorisée à accéder aux premières données, l'envoi (940) des premières données à la NFC.

15. Procédé selon la revendication 14, dans lequel :
les métadonnées liées aux premières données comprennent un ou plusieurs des éléments suivants : un ou plusieurs identifiants des premières données, et une ou plusieurs spécifications des premières données ;
les métadonnées liées à la NFC comprennent un ou plusieurs des éléments suivants : un type de la NFc et un identifiant d'instance de la NFc ;
les métadonnées liées à la NFp comprennent un ou plusieurs des éléments suivants : un type de la NFp et un identifiant d'instance de la NFp ; et
les métadonnées liées à la DRF comprennent un ou plusieurs des éléments suivants : une opération de service pour accéder aux premières données, une fenêtre temporelle pour accéder aux premières données et un identifiant de transaction de stockage associé aux premières données.

16. Procédé selon l'une quelconque des revendications 14 à 15, dans lequel :
l'indication que la NFC est autorisée à accéder aux premières données est un jeton d'accès qui comprend des métadonnées liées à un ou plusieurs des éléments suivants : les premières données, la NFp, la DRF et la NFc ; et
la vérification (930) que la NFc est autorisée à accéder aux premières données comprend la détection (931) d'une correspondance entre des réclamations du jeton d'accès et les métadonnées stockées avec les premières données.

17. Procédé selon l'une quelconque des revendications 14 à 15, dans lequel :
l'indication que la NFc est autorisée à accéder aux premières données est une chaîne qui comprend des métadonnées liées à un ou plusieurs des éléments suivants : les premières données, la NFp, la DRF et la NFc ;
la chaîne est signée par une signature numérique ; et
la vérification (930) que la NFc est autorisée à accéder aux premières données comprend la détection (932) des correspondances suivantes :
entre la signature numérique de la chaîne et une signature numérique associée à la NFp, et entre les métadonnées de la chaîne et les métadonnées stockées avec les premières données.

18. Procédé selon l'une quelconque des revendications 14 à 15, dans lequel l'indication que la NFc est autorisée à accéder aux premières données est une chaîne aléatoire, et la vérification (930) que la NFc est autorisée à accéder aux premières données comprend :
l'envoi (933), à la NFp, d'une deuxième demande qui comprend la chaîne aléatoire, les métadonnées liées aux premières données et les métadonnées liées à la NFC ; et
la réception (934), à partir de la NFp, d'une deuxième réponse indiquant que la NFC est autorisée à accéder aux premières données.

19. Procédé selon l'une quelconque des revendications 1 à 18, dans lequel les premières données comprennent un ou plusieurs des éléments suivants : des données d'analyse et un ou plusieurs modèles d'intelligence artificielle/d'apprentissage automatique, IA/ML.

20. Fonction de réseau consommatrice de données, NFc (510, 610, 1008, 1200, 1402) configurée pour fonctionner dans un réseau de communication (198, 200, 1002), la NFc étant en outre configurée pour :
envoyer (710), à une fonction de réseau productrice de données, NFp (530, 630, 1008, 1200, 1402) du réseau de communication, une première demande de premières données produites par la NFp et stockées dans une fonction de référentiel de données, DRF (520, 620, 1008, 1200, 1402) du réseau de communication ;
recevoir (720), à partir de la NFp, une réponse qui inclut une indication que la NFc est autorisée à accéder aux premières données stockées dans la DRF ;
envoyer (730), à la DRF, une deuxième demande pour les premières données, la deuxième demande incluant l'indication que la NFc est autorisée à accéder aux premières données stockées dans la DRF ; et
recevoir (750) les premières données à partir de la DRF en réponse à la deuxième demande.

21. Fonction de réseau productrice de données, NFp (530, 630, 1008, 1200, 1402) configurée pour fonctionner dans un réseau de communication (198, 200, 1002), la NFp étant en outre configurée pour :
stocker (810), dans une fonction de référentiel de données, DRF (520, 620, 1008, 1200, 1402) du réseau de communication, des premières données ainsi que des métadonnées liées à un ou plusieurs des éléments suivants : les premières données, la NFp, la DRF, et une fonction de réseau consommatrice de données, NFc (510, 610, 1008, 1200, 1402) du réseau de communication ;
recevoir (820), à partir de la NFC, une première demande pour les premières données stockées dans la DRF ; et
envoyer (830), à la NFC, d'une première réponse qui comprend une indication que la NFC est autorisée à accéder aux premières données stockées dans la DRF.

22. Fonction de référentiel de données, DRF (520, 620, 1008, 1200, 1402) configurée pour fonctionner dans un réseau de communication (198, 200, 1002), la DRF étant en outre configuré pour :
stocker (910) des premières données produites par une fonction réseau productrice de données, NFp (530, 630, 1008, 1200, 1402) du réseau de communication, les premières données étant stockées avec des métadonnées liées à un ou plusieurs des éléments suivants : les premières données, la NFp, la DRF et une fonction de réseau consommatrice de données, NFc (510, 610, 1008, 1200, 1402) du réseau de communication ;
recevoir (920) à partir de la NFc une demande pour les premières données, la demande comprenant une indication que la NFC est autorisée à accéder aux premières données ; et
sur la base de la vérification (930) que la NFC est autorisée à accéder aux premières données, envoyer (940) les premières données à la NFC.
